(19) Europäisches Patentamt
European Patent Office
Office européen des brevets

(11) EP 3 193 455 A1

(12) EUROPEAN PATENT APPLICATION

(43) Date of publication:
19.07.2017 Bulletin 2017/29

(51) Int Cl.:
H04B 1/12 (2006.01)
H04B 7/06 (2006.01)
H04B 1/525 (2015.01)

(21) Application number: 17150466.5

(22) Date of filing: 05.01.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 18.01.2016 JP 2016007258

(71) Applicant: FUJITSU LIMITED
Kawasaki-shi Kanagawa 211-8588 (JP)

(72) Inventors:
• AOKI, Nobuhisa
Kawasaki-shi, Kanagawa 211-8588 (JP)
• KAWASAKI, Toshio
Kawasaki-shi, Kanagawa 211-8588 (JP)
• MANIWA, Toru
Kawasaki-shi, Kanagawa 211-8588 (JP)
• SATO, Tadahiro
Kawasaki-shi, Kanagawa 211-8588 (JP)
• TOBISU, Yusuke
Kawasaki-shi, Kanagawa 211-8588 (JP)
• TOWATA, Hiroshi
Fukuoka-shi, Fukuoka 814-8588 (JP)

(74) Representative: Ward, Gregory Peter
Haseltine Lake LLP
Lincoln House
300 High Holborn
London WC1V 7JH (GB)

(54) DISTORTION CANCEL DEVICE AND DISTORTION CANCEL METHOD

(57) A distortion cancel device includes: a first acquiring unit that acquires a plurality of transmission signals including at least two transmission signals that are wirelessly transmitted at an identical frequency; a second acquiring unit that acquires a reception signal to which an intermodulation signal generated due to the transmission signals is attached; and a processor that executes a process including: determining a ratio of the transmission signals acquired by the first acquiring unit and wirelessly transmitted at the identical frequency; generating a ratio signal for each frequency from the transmission signals in accordance with the determined ratio; generating a cancel signal corresponding to the intermodulation signal by using an arithmetic expression that uses the generated ratio signal; and combining the generated cancel signal with the reception signal acquired by the second acquiring unit.

FIG.3

**Description**

The embodiments discussed herein are related to a distortion cancel device and a distortion cancel method.

In recent years, technologies such as carrier aggregation or multi input multi output (MIMO) have been introduced in order to improve the throughput of wireless communication systems. Carrier aggregation is the technology with which a base station device and a wireless terminal device communicate with each other by using multiple carriers that have different frequencies. Furthermore, MIMO is the technology where the transmitting side transmits different sets of data from multiple transmission antennas and the receiving side separates the sets of data transmitted from the transmission antennas on the basis of the reception signals at multiple reception antennas.

Due to the introduction of these technologies, various signals at different frequencies are transmitted inside and outside wireless communication devices, such as base station devices or wireless terminal devices. Furthermore, if a distortion generation source, such as metal, is present on the transmission path for the signals, intermodulation signals occur due to intermodulation of signals at different frequencies. Specifically, intermodulation signals, whose frequency is the sum of or the difference between the multiples of the frequency of each signal, occur at the distortion generation source. Moreover, if the frequency of intermodulation signals is included in the reception frequency band of the wireless communication device, intermodulation signals disturb demodulation and decoding of reception signals, which results in a decrease in the reception quality.

To prevent a decrease in the reception quality due to the above-described intermodulation signals, considerations have been given to cancel intermodulation signals included in reception signals by approximately reproducing intermodulation signals due to intermodulation between transmission signals, transmitted from for example a wireless communication device, and interference signals, transmitted from a different wireless communication device.

Patent document 1: Japanese National Publication of International Patent Application No. 2009-526442

Intermodulation signals, which are generated from signals at different frequencies, may be reproduced through calculations. However, arithmetic expressions for obtaining intermodulation signals contain many coefficients; therefore, there are problems in that the processing loads for calculating intermodulation signals are high and the circuit size in devices becomes large.

Specifically, intermodulation signals included in the reception frequency band usually contain odd-order intermodulation distortion, such as third-order distortion or fifth-order distortion. Furthermore, higher-order intermodulation distortion contains more coefficients in arithmetic expressions used for calculations; therefore, if intermodulation signals are calculated in consideration of high-order intermodulation distortion, the processing amount is increased. Furthermore, in the MIMO, for example, if different signals at the same frequency are transmitted from the single wireless communication device, the arithmetic expression for calculating intermodulation signals becomes further complicated. Therefore, a large amount of arithmetic processing is needed to generate effective replicas of intermodulation signals, which is based on the actual communication situation of the wireless communication system.

The disclosed technology has been made in consideration of the above-described aspect. It is desirable to provide a distortion cancel device and a distortion cancel method, with which an increase in the amount of arithmetic processing may be prevented and the circuit size may be reduced.

According to an aspect of an embodiment, a distortion cancel device includes: a first acquiring unit that acquires a plurality of transmission signals including at least two transmission signals that are wirelessly transmitted at an identical frequency; a second acquiring unit that acquires a reception signal to which an intermodulation signal generated due to the transmission signals is attached; and a processor that executes a process including: determining a ratio of the transmission signals acquired by the first acquiring unit and wirelessly transmitted at the identical frequency; generating a ratio signal for each frequency from the transmission signals in accordance with the determined ratio; generating a cancel signal corresponding to the intermodulation signal by using an arithmetic expression that uses the generated ratio signal; and combining the generated cancel signal with the reception signal acquired by the second acquiring unit.

The invention is described, by way of example only, with reference to the following figures, in which:

FIG. 1 is a block diagram that illustrates the configuration of a wireless communication system according to a first embodiment;

FIG. 2 is a diagram that illustrates a specific example of the number of coefficients in a cancel equation;

FIG. 3 is a block diagram that illustrates the function of a processor according to the first embodiment;

FIG. 4 is a diagram that illustrates a configuration of a ratio-signal generating unit according to the first embodiment;

FIG. 5 is a flowchart that illustrates a distortion cancel process according to the first embodiment;

FIG. 6 is a flowchart that illustrates a ratio calculation process according to the first embodiment;

FIG. 7 is a flowchart that illustrates a ratio calculation process according to the first embodiment;

FIG. 8 is a diagram that illustrates a specific example of the number of coefficients in a cancel equation according to the first embodiment;

FIG. 9 is a flowchart that illustrates another ratio calculation process according to the first embodiment;

FIG. 10 is a flowchart that illustrates another ratio calculation process according to the first embodiment;
FIG. 11 is a block diagram that illustrates the function of the processor according to a second embodiment;
FIG. 12 is a flowchart that illustrates a ratio adjustment process according to the second embodiment;
FIG. 13 is a diagram that illustrates the configuration of the ratio-signal generating unit according to a third embodiment;
FIG. 14 is a block diagram that illustrates the function of the processor according to a fourth embodiment; and
FIG. 15 is a flowchart that illustrates a cancel-signal generation process according to a fourth embodiment.

Preferred aspects of embodiments of the present invention will be explained with reference to accompanying drawings. Furthermore, the present invention is not limited to the embodiments.

[a] First Embodiment

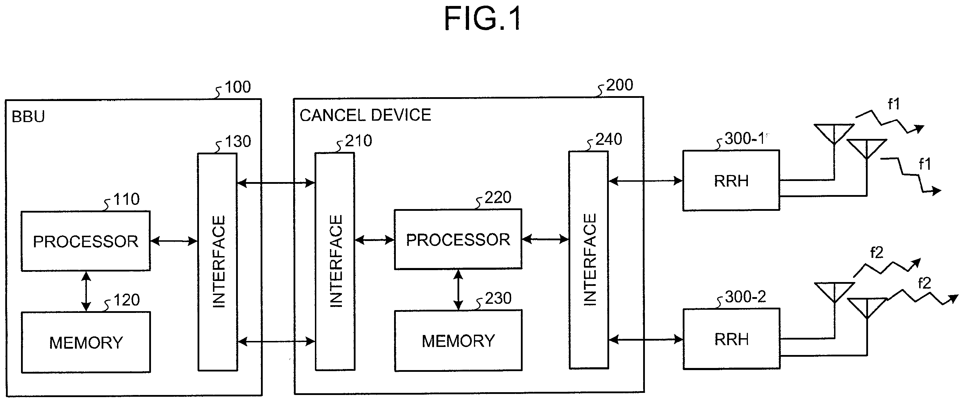

FIG. 1 is a block diagram that illustrates the configuration of a wireless communication system according to a first embodiment. The wireless communication system, illustrated in FIG. 1, includes a baseband unit (hereinafter, abbreviated as "BBU") 100, a cancel device 200, and remote radio heads (hereinafter, abbreviated as "RRHs") 300-1, 300-2. Although the two RRHs 300-1, 300-2 are illustrated in FIG. 1, one or more than three RRHs may be connected to the cancel device 200.

The BBU 100 conducts baseband processing, and it transmits baseband signals, including transmission data, to the cancel device 200. Furthermore, the BBU 100 receives baseband signals, including reception data, from the cancel device 200, and it conducts baseband processing on the baseband signals. Specifically, the BBU 100 includes a processor 110, a memory 120, and an interface 130.

The processor 110 includes, for example, a central processing unit (CPU), a field programmable gate array (FPGA), or a digital signal processor (DSP), and it generates transmission signals that are transmitted from each of the RRHs 300-1, 300-2. According to the present embodiment, the RRH 300-1 transmits transmission signals at a frequency f1, and the RRH 300-2 transmits transmission signals at a frequency f2. Furthermore, each of the RRHs 300-1, 300-2 transmits different transmission signals from two antennas. Therefore, the processor 110 generates transmission signals Tx11, Tx12 transmitted from the two antennas of the RRH 300-1, respectively, and transmission signals Tx21, Tx22 transmitted from the two antennas of the RRH 300-2, respectively. Furthermore, the processor 110 acquires reception data from the reception signals that are received by the RRHs 300-1, 300-2.

The memory 120 includes, for example, a random access memory (RAM) or a read only memory (ROM), and it stores information that is used by the processor 110 to perform operations.

The interface 130 is connected to the cancel device 200 via, for example, an optical fiber, and it transmits and receives baseband signals to and from the cancel device 200. The baseband signals, transmitted by the interface 130, include the above-described transmission signals Tx11, Tx12, Tx21, and Tx22.

The cancel device 200 is connected between the BBU 100 and the RRHs 300-1, 300-2, and it relays baseband signals that are transmitted and received between the BBU 100 and the RRHs 300-1, 300-2. Furthermore, the cancel device 200 generates a cancel signal, which corresponds to an intermodulation signal, on the basis of the transmission signals Tx11, Tx12, Tx21, and Tx22, and it combines the reception signal with the cancel signal. Specifically, the cancel device 200 includes interfaces 210, 240, a processor 220, and a memory 230.

The interface 210 is connected to the BBU 100, and it transmits and receives baseband signals to and from the BBU 100. Specifically, the interface 210 receives transmission signals, generated by the processor 110, from the interface 130 of the BBU 100, and it transmits reception signals, received by the RRHs 300-1, 300-2, to the interface 130 of the BBU 100.

The processor 220 includes, for example, a CPU, an FPGA, or a DSP, and it generates a cancel signal for cancelling an intermodulation signal on the basis of multiple transmission signals received by the interface 210. Furthermore, the processor 220 combines a cancel signal with the reception signal received by the interface 240, thereby cancelling the intermodulation signal that is attached to the reception signal. The function of the processor 220 is described in detail later.

The memory 230 includes, for example, a RAM or a ROM, and it stores the information that is used by the processor 220 to perform operations. Specifically, the memory 230 stores parameters, or the like, which are used when, for example, the processor 220 generates cancel signals.

The interface 240 is connected to the RRHs 300-1, 300-2 via, for example, an optical fiber, and it transmits and receives baseband signals to and from the RRHs 300-1, 300-2. Specifically, the interface 240 transmits transmission signals, received from the BBU 100, to the RRHs 300-1, 300-2, and it receives the reception signals, received by the RRHs 300-1, 300-2, from the RRHs 300-1, 300-2. The intermodulation signal, which occurs due to intermodulation of a signal at the frequency f1 and a signal at the frequency f2, is attached to the reception signal received by the interface 240 from the RRHs 300-1, 300-2.

The RRHs 300-1, 300-2 up-convert each of the baseband signals, received from the cancel device 200, into the radio frequencies f1, f2, and transmit it via the antenna. Specifically, the RRH 300-1 up-converts each of the transmission signals Tx11, Tx12 into the frequency f1 and transmits it via the antenna. Furthermore, the RRH 300-2 up-converts each of the transmission signals Tx21, Tx22 into the frequency f2 and transmits it via the antenna. Moreover, the RRHs 300-1, 300-2 down-convert the reception signal, received via the antenna, into the baseband frequency and transmit it to the cancel device 200. The intermodulation signal, which occurs due to intermodulation of signals at the above-described frequencies f1, f2, is attached to the reception signal received by the RRHs 300-1, 300-2.

As described above, the processor 220 of the cancel device 200 generates cancel signals on the basis of the transmission signals Tx11, Tx12, Tx21, and Tx22. The cancel signal is a replica of the intermodulation signal that is generated due to multiple transmission signals, and for example the following cancel equation (1) may be used for its generation. Here, Equation (1) is the equation for generating a cancel signal C to cancel third-order distortion and fifth-order distortion in a reception frequency band in a case where the frequency (2f1-f2) is included in the reception frequency band.

$$
\begin{aligned}
C = \{ & p_{11}|Tx11|^2 + p_{21}|Tx12|^2 + p_{31}|Tx21|^2 + p_{41}|Tx22|^2 \\
& + p_{51}\cdot Tx11\cdot conj(Tx12) + p_{61}\cdot conj(Tx11)\cdot Tx12 \\
& + p_{71}\cdot Tx21\cdot conj(Tx22) + p_{81}\cdot conj(Tx21)\cdot Tx22 \\
& + p_{91}\}\cdot Tx11\cdot Tx11\cdot conj(Tx21) \\
& + \{ p_{12}|Tx11|^2 + p_{22}|Tx12|^2 + p_{32}|Tx21|^2 + p_{42}|Tx22|^2 \\
& + p_{52}\cdot Tx11\cdot conj(Tx12) + p_{62}\cdot conj(Tx11)\cdot Tx12 \\
& + p_{72}\cdot Tx21\cdot conj(Tx22) + p_{82}\cdot conj(Tx21)\cdot Tx22 \\
& + p_{92}\}\cdot Tx11\cdot Tx12\cdot conj(Tx21) \\
& + \{ p_{13}|Tx11|^2 + p_{23}|Tx12|^2 + p_{33}|Tx21|^2 + p_{43}|Tx22|^2 \\
& + p_{53}\cdot Tx11\cdot conj(Tx12) + p_{63}\cdot conj(Tx11)\cdot Tx12 \\
& + p_{73}\cdot Tx21\cdot conj(Tx22) + p_{83}\cdot conj(Tx21)\cdot Tx22 \\
& + p_{93}\}\cdot Tx12\cdot Tx12\cdot conj(Tx21) \\
& + \{ p_{14}|Tx11|^2 + p_{24}|Tx12|^2 + p_{34}|Tx21|^2 + p_{44}|Tx22|^2 \\
& + p_{54}\cdot Tx11\cdot conj(Tx12) + p_{64}\cdot conj(Tx11)\cdot Tx12 \\
& + p_{74}\cdot Tx21\cdot conj(Tx22) + p_{84}\cdot conj(Tx21)\cdot Tx22 \\
& + p_{94}\}\cdot Tx11\cdot Tx11\cdot conj(Tx22) \\
& + \{ p_{15}|Tx11|^2 + p_{25}|Tx12|^2 + p_{35}|Tx21|^2 + p_{45}|Tx22|^2 \\
& + p_{55}\cdot Tx11\cdot conj(Tx12) + p_{65}\cdot conj(Tx11)\cdot Tx12 \\
& + p_{75}\cdot Tx21\cdot conj(Tx22) + p_{85}\cdot conj(Tx21)\cdot Tx22 \\
& + p_{95}\}\cdot Tx11\cdot Tx12\cdot conj(Tx22) \\
& + \{ p_{16}|Tx11|^2 + p_{26}|Tx12|^2 + p_{36}|Tx21|^2 + p_{46}|Tx22|^2 \\
& + p_{56}\cdot Tx11\cdot conj(Tx12) + p_{66}\cdot conj(Tx11)\cdot Tx12 \\
& + p_{76}\cdot Tx21\cdot conj(Tx22) + p_{86}\cdot conj(Tx21)\cdot Tx22 \\
& + p_{96}\}\cdot Tx12\cdot Tx12\cdot conj(Tx22)
\end{aligned}
\tag{1}
$$

In Equation (1), $p_{11}$ to $p_{96}$ indicate predetermined coefficients, and conj(x) indicates the complex conjugate of x. The cancel equation (1) includes 54 coefficients of $p_{11}$ to $p_{96}$, and if the cancel signal C is calculated by using the cancel equation (1), the cancel signal C is calculated after the 54 coefficients are obtained.

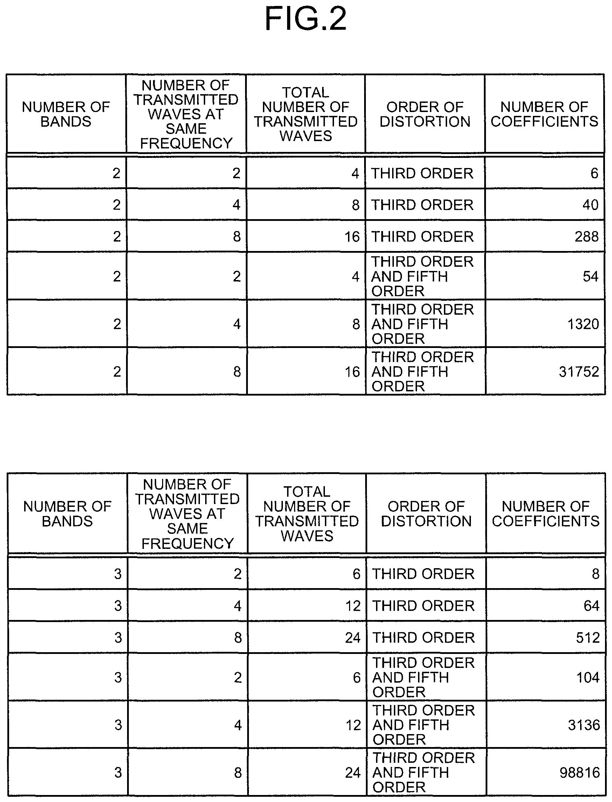

FIG. 2 is a diagram that illustrates the number of coefficients in the cancel equation under various conditions. As the above Equation (1) is the cancel equation for obtaining third-order distortion and fifth-order distortion in a case where there are two transmitted waves in each of the two bands at the frequencies f1, f2, the number of coefficients is 54. With reference to FIG. 2, as for other conditions, too, as there is an increase in the number of bands, the number of transmitted waves that are transmitted at the same frequency, and the order of distortion that is considered, the number of coefficients is increased, and it is difficult to calculate a cancel signal by using the cancel equation.

As described above, the cancel equation includes a large number of coefficients, and the arithmetic processing for calculating cancel signals tends to be complicated. Therefore, the processor 220 according to the present embodiment multiplies each transmission signal, transmitted at the same frequency, by the ratio of the amplitude and the phase of the transmission signal and adds them up so as to generate the ratio signal for each frequency, thereby generating the cancel equation using the ratio signal. Specifically, the processor 220 generates a ratio signal TxA, indicated by the following Equation (2), from the transmission signals Tx11, Tx12, and it generates a ratio signal TxB, indicated by the following Equation (3), from the transmission signals Tx21, Tx22.

$$TxA=Tx11+m1\cdot Tx12 \tag{2}$$

$$TxB=Tx21+m2\cdot Tx22 \tag{3}$$

Here, in the above Equations (2), (3), m1 is the ratio of the transmission signal Tx12 to the transmission signal Tx11, and m2 is the ratio of the transmission signal Tx22 to the transmission signal Tx21. Each of the ratios m1 and m2 indicates the ratio between transmission signals at the distortion generation source, and it includes the amplitude component and the phase component. The above-described ratios m1, m2 are obtained and the ratio signals in the above Equations (2), (3) are generated, whereby the cancel equation (1) may be replaced with the following cancel equation (4).

$$C=\{p_{11}|TxA|^2+p_{21}|TxB|+p_{31}\}\cdot TxA\cdot TxA\cdot conj(TxB) \tag{4}$$

The cancel equation (4) includes only the three coefficients $p_{11}$, $p_{21}$, and $p_{31}$ and, compared to the cancel equation (1) that includes the 54 coefficients, it is understood that the amount of arithmetic processing may be largely reduced. A specific explanation is given below of generation of the cancel equation that uses the above-described ratio signal.

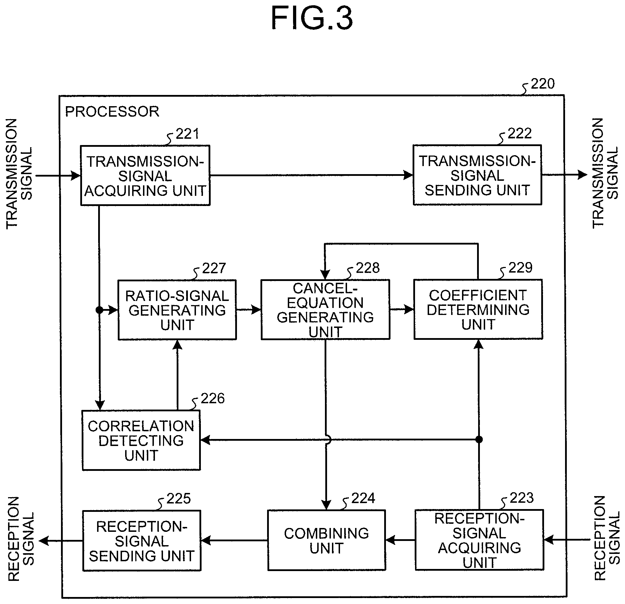

FIG. 3 is a block diagram that illustrates the function of the processor 220 according to the first embodiment. The processor 220, illustrated in FIG. 3, includes a transmission-signal acquiring unit 221, a transmission-signal sending unit 222, a reception-signal acquiring unit 223, a combining unit 224, a reception-signal sending unit 225, a correlation detecting unit 226, a ratio-signal generating unit 227, a cancel-equation generating unit 228, and a coefficient determining unit 229.

The transmission-signal acquiring unit 221 acquires transmission signals that are received from the BBU 100 via the interface 210. That is, the transmission-signal acquiring unit 221 acquires the transmission signals Tx11, Tx12, Tx21, and Tx22.

The transmission-signal sending unit 222 sends transmission signals, acquired by the transmission-signal acquiring unit 221, to the RRHs 300-1, 300-2 via the interface 240. Specifically, the transmission-signal sending unit 222 sends the transmission signals Tx11, Tx12, which are transmitted at the frequency f1, to the RRH 300-1, and sends the transmission signals Tx21, Tx22, which are transmitted at the frequency f2, to the RRH 300-2.

The reception-signal acquiring unit 223 acquires the reception signals that are received from the RRHs 300-1, 300-2 via the interface 240. An intermodulation signal, generated due to intermodulation of transmission signals at the frequencies f1, f2, is attached to the reception signal that is acquired by the reception-signal acquiring unit 223.

The combining unit 224 combines a reception signal with the cancel signal that is generated by the cancel-equation generating unit 228 using the cancel equation. Specifically, the combining unit 224 combines a cancel signal with the reception signal, to which the intermodulation signal is attached, thereby canceling the intermodulation signal.

The reception-signal sending unit 225 sends the reception signal, in which the intermodulation signal has been cancelled, to the BBU 100 via the interface 210.

The correlation detecting unit 226 detects the correlation between a transmission signal and a reception signal and, on the basis of the correlation value, calculates the ratio that is to be multiplied by each transmission signal. Specifically, the correlation detecting unit 226 calculates the correlation value between the reception signal and each of the intermodulation distortion components that may be generated from multiple transmission signals. Specifically, the intermodulation distortion components at the frequency (2f1-f2), which may be generated from, for example, the transmission signals Tx11, Tx12, Tx21, and Tx22, include the component that is obtained by multiplying the product of transmission signals at the frequency f1 by the complex conjugate of the transmission signal at the frequency f2. Therefore, the correlation detecting unit 226 detects the correlation value between the reception signal and the following 6 types of intermodulation distortion components (A) to (F).

(A) Tx11·Tx11·conj(Tx21)
(B) Tx11·Tx12·conj(Tx21)
(C) Tx12·Tx12·conj(Tx21)
(D) Tx11·Tx11·conj(Tx22)
(E) Tx11·Tx12·conj(Tx22)
(F) Tx12·Tx12·conj(Tx22)

Then, the correlation detecting unit 226 determines the ratio of the intermodulation distortion component with the largest correlation value to a different intermodulation distortion component, thereby obtaining the ratio of the transmission signal. Specifically, if the correlation value between the above-described (A) and the reception signal is largest, for example, the correlation detecting unit 226 calculates the ratio between the largest correlation value and a different correlation value, thereby obtaining the ratio of the transmission signal at each frequency. For example, if the ratio between the transmission signal Tx11 and the transmission signal Tx12 at the frequency f1 is to be obtained, the correlation detecting unit 226 selects the intermodulation distortion component in which at least one Tx11, included in the above-described (A), is replaced with Tx12. Here, as the above-described (B) and (C) satisfy the condition, the correlation detecting unit 226 calculates the ratio between, for example, the correlation value with regard to (A) and the correlation value with regard to (B), and it determines that the calculated ratio is the ratio between the transmission signal Tx11 and the transmission signal Tx12. Furthermore, if the ratio between the correlation value with regard to (A) and the correlation value with regard to (C) is calculated, the correlation detecting unit 226 determines that the positive square root of the calculated ratio is the ratio between the transmission signal Tx11 and the transmission signal Tx12. This is because, in the above-described (A) and the above-described (C), the square of Tx11 is replaced with the square of Tx12.

In the same manner, if the ratio between the transmission signal Tx21 and the transmission signal Tx22 at the frequency f2, for example, is to be obtained, the correlation detecting unit 226 selects the intermodulation distortion component in which Tx21, included in the above-described (A), is replaced with Tx22. Here, as the above-described (D) satisfies the condition, the correlation detecting unit 226 calculates the ratio between the correlation value with regard to (A) and the correlation value with regard to (D), and it determines that the calculated ratio is the ratio between the transmission signal Tx21 and the transmission signal Tx22. The ratios calculated as described above are equivalent to m1 and m2 in the above Equations (2), (3). Furthermore, the correlation detecting unit 226 notifies the calculated ratios m1, m2 to the ratio-signal generating unit 227.

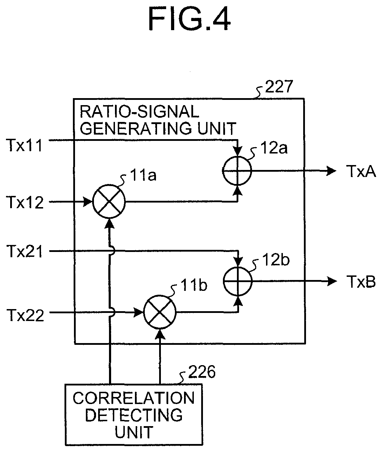

The ratio-signal generating unit 227 uses the transmission signals Tx11, Tx12, Tx21, Tx22 and the ratios m1, m2 to generate the ratio signal. Specifically, the ratio-signal generating unit 227 generates the ratio signals TxA, TxB by using the above Equations (2), (3). Specifically, the ratio-signal generating unit 227 includes multipliers 11 a, 11 b and adders 12a, 12b, as illustrated in for example FIG. 4. The multiplier 11 a and the adder 12a generate the ratio signal TxA from the transmission signals Tx11, Tx12 in accordance with the above Equation (2). Furthermore, the multiplier 11b and the adder 12b generate the ratio signal TxB from the transmission signals Tx21, Tx22 in accordance with the above Equation (3). The ratio signal TxA is the ratio signal to which the ratio of the transmission signal at the frequency f1 is applied, and the ratio signal TxB is the ratio signal to which the ratio of the transmission signal at the frequency f2 is applied.

With reference back to FIG. 3, the cancel-equation generating unit 228 generates the cancel equation for generating the cancel signal from the ratio signals TxA, TxB. Specifically, the cancel-equation generating unit 228 generates the above Equation (4). Furthermore, after the coefficient determining unit 229 determines the coefficient of the cancel equation, the cancel-equation generating unit 228 outputs the cancel signal, generated by using the cancel equation, to the combining unit 224.

The coefficient determining unit 229 determines the coefficients included in the cancel equation by using for example the least-square method. Specifically, the coefficient determining unit 229 determines the coefficients $p_{11}$, $p_{21}$, and $p_{31}$, included in the above Equation (4), by using the least-square method, or the like, which uses the reception signal. Furthermore, for example, the coefficient determining unit 229 may determine the coefficients $p_{11}$, $p_{21}$, and $p_{31}$ that maximize the correlation between a cancel signal and a reception signal. Then, the coefficient determining unit 229 notifies the determined coefficients $p_{11}$, $p_{21}$, and $p_{31}$ to the cancel-equation generating unit 228.

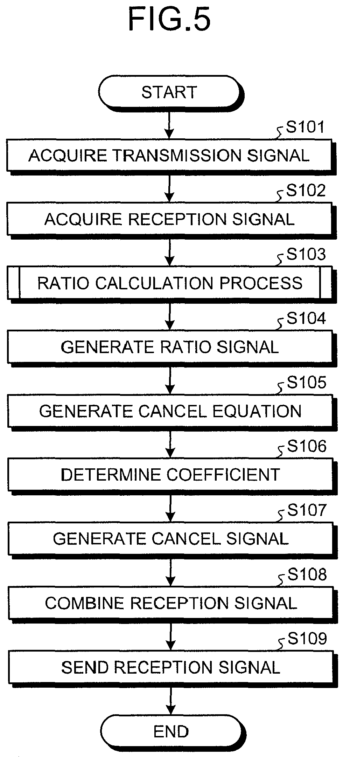

Next, with reference to the flowchart illustrated in FIG. 5, an explanation is given of a distortion cancel process by the cancel device 200 that is configured as described above. The following distortion cancel process is principally performed by the processor 220 of the cancel device 200.

The transmission signals Tx11, Tx12, Tx21, and Tx22, transmitted from the BBU 100, are acquired by the transmission-signal acquiring unit 221 of the processor 220 via the interface 210 (Step S101). Furthermore, the reception signals, received by the RRHs 300-1, 300-2, are acquired by the reception-signal acquiring unit 223 of the processor 220 via the interface 240 (Step S102). The intermodulation signal due to intermodulation of the transmission signals Tx11, Tx12, Tx21, and Tx22 is attached to the reception signal at the RRHs 300-1, 300-2.

After the transmission signal and the reception signal are acquired, the correlation detecting unit 226 calculates the ratio between the transmission signals to generate a ratio signal (Step S103). Calculation of the ratio by the correlation detecting unit 226 is conducted such that the ratio between the transmission signals at the same frequency is obtained from the ratio of the correlation value between the intermodulation distortion component and the reception signal. This ratio calculation process is explained in detail.

After the correlation detecting unit 226 calculates the ratio between the transmission signals at the same frequency, the ratio-signal generating unit 227 multiplies each transmission signal by the ratio and adds them up, thereby generating the ratio signal for each frequency (Step S104). Specifically, the transmission signals Tx11, Tx12 at the frequency f1, for example, are multiplied by the ratio and they are added up so that the ratio signal TxA at the frequency f1 is generated. Specifically, in the ratio-signal generating unit 227 illustrated in FIG. 4, for example, the adder 12a adds the transmission signal Tx11 with the ratio of 1 to the transmission signal Tx12, which has been multiplied by the ratio m1 by the multiplier 11a, whereby the ratio signal TxA with regard to the frequency f1 is generated. In the same manner, the adder 12b adds the transmission signal Tx21 with the ratio of 1 to the transmission signal Tx22, which has been multiplied by the ratio m2 by the multiplier 11 b, whereby the ratio signal TxB with regard to the frequency f2 is generated.

The generated ratio signal is output to the cancel-equation generating unit 228, and the cancel equation is generated by the cancel-equation generating unit 228 using the ratio signal (Step S105). Specifically, the cancel-equation generating unit 228 generates the above Equation (4). Then, the coefficient determining unit 229 performs, for example, the least-square method that uses reception signals or correlation detection, thereby determining the coefficient of the cancel equation (Step S106). Here, the coefficients $p_{11}$, $p_{21}$, and $p_{31}$ in the above Equation (4) are determined by the coefficient determining unit 229.

If the coefficient is determined, a cancel signal may be generated from the transmission signal by using the cancel equation; therefore, the cancel-equation generating unit 228 generates the cancel signal (Step S107) and outputs it to the combining unit 224. Then, the combining unit 224 combines the reception signal with the cancel signal (Step S108), thereby canceling the intermodulation signal that is attached to the reception signal. After the intermodulation signal is cancelled, the reception-signal sending unit 225 sends the reception signal to the BBU 100 via the interface 210 (Step S109).

As described above, in a case where transmission signals are transmitted at the frequencies f1, f2 two by two, the ratio signal is generated so that the cancel signal for the intermodulation signal, which is generated at the frequency (2f1-f2), may be generated by using the cancel equation that includes only three coefficients. Therefore, compared to the case where the cancel signal is generated by using the above Equation (1) under the same condition, the amount of arithmetic processing may be largely reduced, and the circuit size may be decreased.

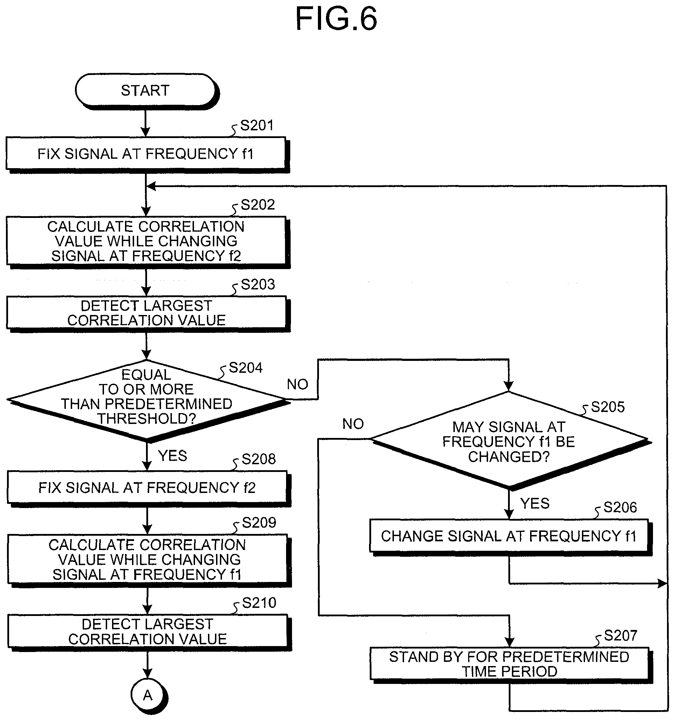

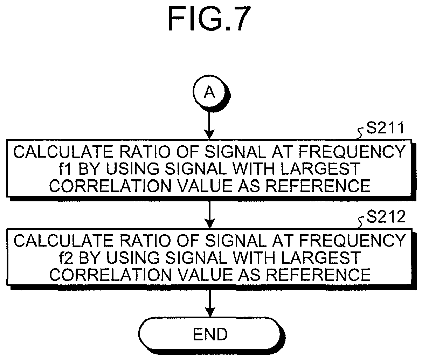

Next, with reference to the flowcharts illustrated in FIGS. 6 and 7, a specific explanation is given of the ratio calculation process by the correlation detecting unit 226.

After the transmission signals Tx11, Tx12, Tx21, and Tx22 and the reception signal are input to the correlation detecting unit 226, the correlation value between the above-described 6 types of intermodulation distortion components (A) to (F) and the reception signal is calculated. Here, the correlation detecting unit 226 first fixes any one of the combinations of Tx11·Tx11, Tx11·Tx12, and Tx12·Tx12 as the signal at the frequency f1 (Step S201) and, while changing the signal at the frequency f2, calculates the correlation value between the intermodulation distortion component and the reception signal (Step S202). Specifically, the correlation detecting unit 226 fixes for example Tx11·Tx11 as the signal at the frequency f1, included in the intermodulation distortion component, changes the signal at the frequency f2 to Tx21, Tx22, and then calculates the correlation value between each intermodulation distortion component and the reception signal. In other words, the correlation detecting unit 226 calculates the correlation value between each of the above-described (A) and (D) and the reception signal.

Then, the correlation detecting unit 226 detects the largest correlation value from the calculated correlation values (Step S203) and determines the intermodulation distortion component that gives the largest correlation value. Specifically, the intermodulation distortion component, of which the correlation value with the reception signal is largest, is determined from the above-described (A) and (D). Furthermore, the correlation detecting unit 226 compares the largest correlation value with a predetermined threshold and determines whether the largest correlation value is equal to or more than the predetermined threshold (Step S204).

As a result of the determination, if the largest correlation value is less than the predetermined threshold (No at Step S204), it is determined whether the fixed signal at the frequency f1 may be changed to a different signal at the frequency f1 (Step S205). Specifically, although Tx11·Tx11 are here fixed as the signals at the frequency f1, it is determined whether there are other remaining combinations of signals at the frequency f1, which have not been on trials. Here, as there remain the combinations of Tx11·Tx12 and Tx12·Tx12 (Yes at Step S205), any of the remaining combinations is fixed as the signal at the frequency f1 (Step S206). Then, the correlation value between the intermodulation distortion component and the reception signal is calculated while the signal at the frequency f2 is changed again (Step S202). Conversely, if trials on all the combinations of the signals at the frequency f1 have been completed (No at Step S205), a standby continues for a predetermined time period (Step S207). Then, the correlation value between the intermodulation distortion component and the reception signal is calculated while the signal at the frequency f2 is changed again (Step S202). Here, there is a possibility that, as the wireless environment, or the like, changes due to standby for a predetermined time period, the correlation value between the intermodulation distortion component and the reception signal becomes larger and it becomes equal to or more than the predetermined threshold.

As described above, while the largest correlation value between the intermodulation distortion component and the reception signal is less than the predetermined threshold, calculation of the correlation value is repeated until the largest correlation value becomes equal to or more than the predetermined threshold. Then, if the largest correlation value is equal to or more than the predetermined threshold (Yes at Step S204), the correlation detecting unit 226 fixes the signal at the frequency f2 included in the intermodulation distortion component that gives the largest correlation value (Step S208) and, while changing the signal at the frequency f1, calculates the correlation value between the intermodulation distortion component and the reception signal (Step S209). Specifically, if for example the above-described (A) gives the largest correlation value, the correlation detecting unit 226 fixes Tx21 as the signal at the frequency f2, included in the intermodulation distortion component, changes the combination of signals at the frequency f1, and calculates the correlation value between each intermodulation distortion component and the reception signal. In other words, the correlation detecting unit 226 calculates the correlation value between each of the above-described (A) to (C) and the reception signal.

Then, the correlation detecting unit 226 detects the largest correlation value from the calculated correlation values (Step S210) and determines the intermodulation distortion component that gives the largest correlation value. Specifically, the intermodulation distortion component, of which the correlation value with the reception signal is largest, is determined from the above-described (A) to (C). There is a high possibility that the intermodulation distortion component determined as described above is the intermodulation distortion component of which the correlation value with the reception signal is largest among the above-described (A) to (F). Furthermore, as described above, the signal at the frequency f1 is fixed so that the signal at the frequency f2 that gives the largest correlation value with the reception signal is determined, and then the signal at the frequency f2 is fixed so that the signal at the frequency f1 that gives the largest correlation value with the reception signal is determined. That is, the signal that gives the largest correlation value is determined for each frequency, and the determined signal is sequentially fixed so that the signal that gives the largest correlation value is determined with regard to a different frequency. Therefore, without calculating the correlation value with the reception signal with regard to all the intermodulation distortion components, the intermodulation distortion component with the largest correlation value may be determined, whereby the amount of processing to calculate the correlation value may be reduced.

After the intermodulation distortion component, which gives the largest correlation value with the reception signal, is determined, the ratio of the transmission signal at the frequency f1 is calculated by using the signal as a reference (Step S211). Specifically, the ratio between the transmission signals Tx11, Tx12 at the frequency f1 is obtained from the ratio between the correlation values with regard to the intermodulation distortion components. For example, if the above-described (A) and (B) are compared, they are different only in that the second signal is Tx11 or Tx12. Similarly, for example, if the above-described (B) and (C) are compared, they are different only in that the first signal is Tx11 or Tx12. In this manner, as there are intermodulation distortion components, where Tx11 and Tx12 are replaced, with regard to the single intermodulation distortion component, the ratio between the correlation values with regard to the intermodulation distortion components may be the ratio between the transmission signals Tx11, Tx12.

Therefore, for example, if the intermodulation distortion component that gives the largest correlation value with the reception signal is the above-described (A), the ratio between the correlation values with regard to the above-described (A), (B) is calculated, and the calculated ratio is the ratio between the transmission signals Tx11, Tx12. Furthermore, the ratio between the correlation values with regard to the above-described (A), (C) is calculated, and the positive square root of the calculated ratio may be the ratio between the transmission signals Tx11, Tx12. Here, the reason why the positive square root of the calculated ratio is obtained is that the above-described (A), (C) include the square of Tx11, Tx12, respectively.

In the same manner as calculation of the ratio between the transmission signals at the frequency f1, the ratio between the transmission signals at the frequency f2 is calculated by using the intermodulation distortion component, which gives the largest correlation value with the reception signal, as a reference (Step S212). That is, the ratio between the transmission signals Tx21, Tx22 at the frequency f2 is obtained from the ratio between the correlation values with regard to the intermodulation distortion components. For example, if the above-described (A), (D) are compared, they are different only in that the third signal is Tx21 or Tx22. As described above, as there are intermodulation distortion components, where Tx21 and Tx22 are replaced, with regard to the single intermodulation distortion component, the ratio between the correlation values with regard to the intermodulation distortion components may be the ratio between the transmission signals Tx21, Tx22.

Therefore, for example, if the intermodulation distortion component that gives the largest correlation value with the reception signal is the above-described (A), the ratio between the correlation values with regard to the above-described (A), (D) is calculated, and the calculated ratio is the ratio between the transmission signals Tx21, Tx22. The ratio between the transmission signals at each frequency, calculated as described above, is notified to the ratio-signal generating unit 227, and it is used to generate the ratio signal for each frequency.

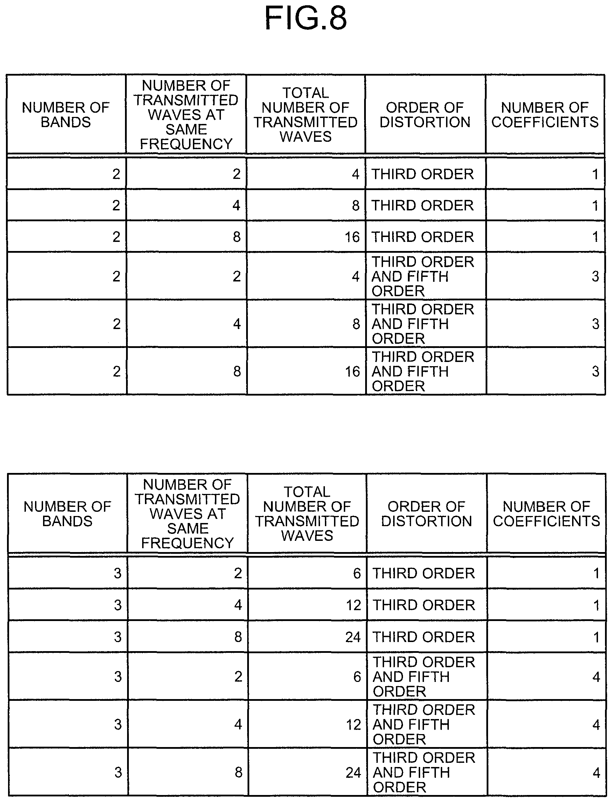

In this way, the ratio between transmission signals at each frequency is calculated on the basis of the correlation value of each intermodulation distortion component, and the ratio signal is generated, whereby the cancel equation with a few coefficients may be generated by using the ratio signal. FIG. 8 is a diagram that illustrates the number of coefficients in each cancel equation if the cancel equation is generated by using the ratio signal under the same condition as that of FIG. 2. As described above, if there are two transmitted waves in each of the two bands at the frequencies f1, f2 and consideration is given to third-order distortion and fifth-order distortion, the cancel equation (1) includes 54 coefficients; however, the cancel equation (4), which uses the ratio signal, includes only 3 coefficients. Furthermore, as it is understood from the comparison between FIG. 2 and FIG. 8, the number of coefficients included in the cancel equation may be largely reduced by using the ratio signal under any condition. As a result, it is possible to reduce the amount of processing to determine the coefficient in the cancel equation, the amount of processing to calculate the cancel signal by using the cancel equation, or the like.

As described above, according to the present embodiment, the correlation value with the reception signal is calculated with regard to each intermodulation distortion component, the ratio of the transmission signal at each frequency is obtained from the ratio of the calculated correlation value, and each transmission signal at each frequency is multiplied by the ratio and they are added up so that the ratio signal is generated. Then, the cancel equation for calculating the cancel signal is generated by using the ratio signal. Therefore, the number of coefficients included in the cancel equation may be reduced, an increase in the amount of arithmetic processing may be prevented, and the circuit size may be decreased.

Furthermore, according to the above-described first embodiment, the correlation value between the intermodulation distortion component and the reception signal is calculated by the correlation detecting unit 226 on a regular basis so that the ratio used to generate the ratio signal may be updated. That is, the ratio signal generated by the ratio-signal generating unit 227 is updated on a regular basis so that the cancel equation may be accordingly updated on a regular basis.

Other specific examples

In the above-described first embodiment, an explanation is given of a case where two transmitted waves at the two frequencies f1, f2 are transmitted from the two RRHs 300-1, 300-2, respectively, and the intermodulation signal at the frequency (2f1-f2) is attached to the reception signal. However, generation of the cancel equation that uses the ratio signal may be performed in a case where transmitted waves at more frequencies are transmitted or more transmitted waves are transmitted at the same frequency. Therefore, an explanation is given below of a ratio calculation process in a case where there are 8 transmitted waves at each of the four frequencies f1 to f4 and the intermodulation signal at the frequency (f1+f2-f3) is attached to the reception signal.

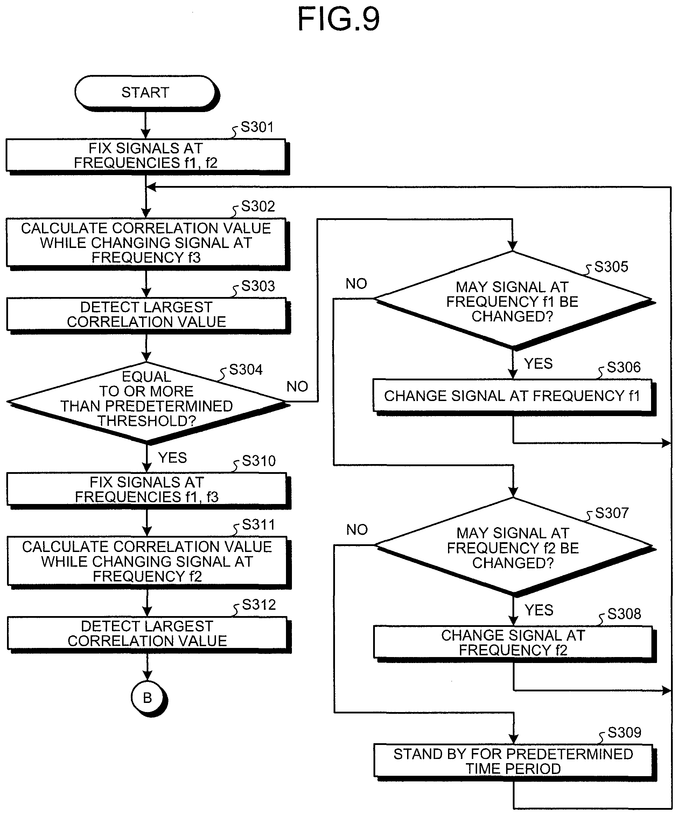

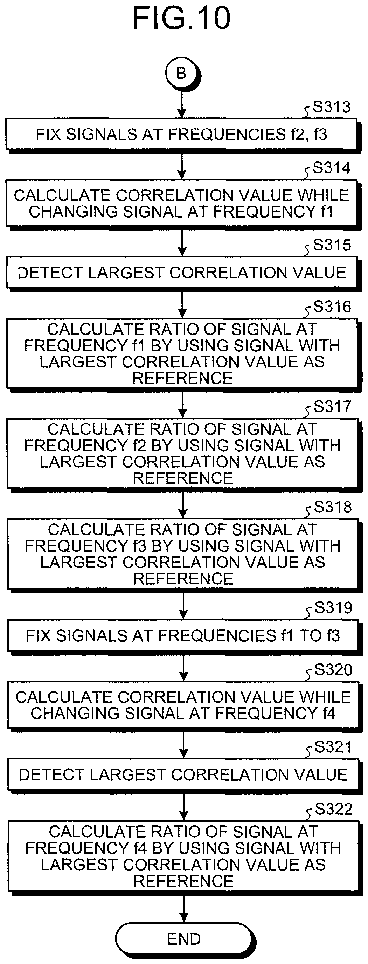

FIGS. 9 and 10 are flowcharts that illustrate the ratio calculation process by the correlation detecting unit 226. Hereafter, 8 transmission signals Tx11 to Tx18 are transmitted at the frequency f1, 8 transmission signals Tx21 to Tx28 are transmitted at the frequency f2, 8 transmission signals Tx31 to Tx38 are transmitted at the frequency f3, and 8 transmission signals Tx41 to Tx48 are transmitted at the frequency f4.

If the above-described 32 transmission signals in total and the reception signal are input to the correlation detecting unit 226, the correlation value between the intermodulation distortion component, which is generated from the transmission signal, and the reception signal is calculated. Here, as the intermodulation signal at the frequency (f1+f2-f3) is attached to the reception signal, the calculated correlation value between the intermodulation distortion component and the reception signal is represented by using the expression of Tx1a·Tx2b·conj(Tx3c) (all of a, b, and c are an integer from 1 to 8). Here, the correlation detecting unit 226 first fixes any of the combinations as the signals at the frequencies f1, f2 (Step S301) and, while changing the signal at the frequency f3, calculates the correlation value between the intermodulation distortion component and the reception signal (Step S302). Specifically, the correlation detecting unit 226 fixes Tx11, Tx21 as the signals at the frequencies f1, f2, included in the intermodulation distortion component, for example, and while the signal at the frequency f3 is changed from Tx31 to Tx38, the correlation value between the intermodulation distortion component and the reception signal is calculated.

Then, the correlation detecting unit 226 detects the largest correlation value from the calculated correlation values (Step S303) and determines the intermodulation distortion component that gives the largest correlation value. Furthermore, the correlation detecting unit 226 compares the largest correlation value with a predetermined threshold, thereby determining whether the largest correlation value is equal to or more than the predetermined threshold (Step S304).

As a result of the determination, if the largest correlation value is less than the predetermined threshold (No at Step S304), it is determined whether the fixed signal at the frequency f1 may be changed to a different signal at the frequency f1 (Step S305). Specifically, although Tx11 is here fixed as the signal at the frequency f1, it is determined whether there are other remaining signals at the frequency f1, which have not been on trials. Here, as Tx12 to Tx18 remain (Yes at Step S305), any of the remaining signals is fixed as the signal at the frequency f1 (Step S306). Then, the correlation value between the intermodulation distortion component and the reception signal is calculated again while the signal at the frequency f3 is changed (Step S302).

Conversely, if trials on all the signals at the frequency f1 have been completed (No at Step S305), it is determined whether the fixed signal at the frequency f2 may be changed to a different signal at the frequency f2 (Step S307). Specifically, although Tx21 is here fixed as the signal at the frequency f2, it is determined whether there are other remaining signals at the frequency f2, which have not been on trials. Here, as Tx22 to Tx28 remain (Yes at Step S307), any of the remaining signals is fixed as the signal at the frequency f2 (Step S308). Then, the correlation value between the intermodulation distortion component and the reception signal is calculated while the signal at the frequency f3 is changed again (Step S302).

Furthermore, if trials on all the signals at the frequencies f1, f2 have been completed (No at Step S307), a standby continues for a predetermined time period (Step S309). Then, the correlation value between the intermodulation distortion component and the reception signal is calculated while the signal at the frequency f3 is changed again (Step S302). Here, there is a possibility that, as the wireless environment, or the like, changes due to a standby for a predetermined time period, the correlation value between the intermodulation distortion component and the reception signal becomes larger and it becomes equal to or more than the predetermined threshold.

As described above, while the largest correlation value between the intermodulation distortion component and the reception signal is less than the predetermined threshold, calculation of the correlation value is repeated until the largest correlation value becomes equal to or more than the predetermined threshold. Then, if the largest correlation value is equal to or more than the predetermined threshold (Yes at Step S304), the correlation detecting unit 226 fixes the signals at the frequencies f1, f3, included in the intermodulation distortion component that gives the largest correlation value (Step S310) and, while changing the signal at the frequency f2, calculates the correlation value between the intermodulation distortion component and the reception signal (Step S311). Specifically, if the largest correlation value is obtained when for example Tx32 is the signal at the frequency f3, the correlation detecting unit 226 fixes Tx11, Tx32 as the signals at the frequencies f1, f3, included in the intermodulation distortion component and, while changing the signal at the frequency f2 from Tx21 to Tx28, calculates the correlation value between the intermodulation distortion component and the reception signal.

Then, the correlation detecting unit 226 detects the largest correlation value from the calculated correlation values (Step S312) and determines the intermodulation distortion component that gives the largest correlation value. The largest correlation value obtained here is the value equal to or more than the largest correlation value that is determined to be equal to or more than the predetermined threshold at the above-described Step S304. Therefore, the correlation detecting unit 226 continuously fixes the signals at the frequencies f2, f3, included in the intermodulation distortion component that gives the largest correlation value (Step S313) and, while changing the signal at the frequency f1, calculates the correlation value between the intermodulation distortion component and the reception signal (Step S314).

Then, the correlation detecting unit 226 detects the largest correlation value from the calculated correlation values (Step S315) and determines the intermodulation distortion component that gives the largest correlation value. Specifically, the intermodulation distortion component, of which the correlation value with the reception signal is largest, is determined among the intermodulation distortion components that are represented by using the above-described expression of Tx1a·Tx2b·conj(Tx3c).

After the intermodulation distortion component that gives the largest correlation value with regard to the reception signal is determined, the ratio of the transmission signal at the frequency f1 is calculated by using the signal as a reference (Step S316). Specifically, the ratios of the transmission signals Tx11 to Tx18 at the frequency f1 are obtained from the ratios of the correlation values with regard to the intermodulation distortion components. For example, if Tx11·Tx21·conj(Tx32) and Tx12·Tx21·conj(Tx32) are compared, they are different only in that the first signal is Tx11 or Tx12. Therefore, the ratio between the correlation values with regard to the intermodulation distortion components is calculated, and the calculated ratio is the ratio between the transmission signals Tx11, Tx12. Furthermore, in the same manner, the ratio is calculated with regard to other transmission signals at the frequency f1.

In the same manner as calculation of the ratio between the transmission signals at the frequency f1, the ratio between the transmission signals at the frequency f2 is calculated by using the intermodulation distortion component, which gives the largest correlation value with the reception signal, as a reference (Step S317), and the ratio between the transmission signals at the frequency f3 is calculated (Step S318). Thus, the ratios are calculated with regard to the transmission signals at the frequencies f1, f2, f3, which generate intermodulation signals at the frequency (f1+f2-f3). Here, as the ratio has not been calculated with regard to the transmission signals at the frequency f4, the ratios of the transmission signals Tx41 to Tx48 are calculated as described below.

That is, the correlation value is calculated with regard to the reception signal and the signal obtained by multiplying the intermodulation distortion component, which gives the largest correlation value with the reception signal, by the square of the transmission signal at the frequency f4. Specifically, in the signal that is represented by using the expression of $Tx1a \cdot Tx2b \cdot conj(Tx3c) - |Tx4d|^2$ (a, b, c, and d is an integer from 1 to 8), the values corresponding to the intermodulation distortion component, which gives the largest correlation value with the reception signal, are fixed as a, b, and c (Step S319). Then, the correlation value with the reception signal is calculated while d in the signal is changed (Step S320). Then, the correlation detecting unit 226 detects the largest correlation value from the calculated correlation values (Step S321) and determines the value of d that gives the largest correlation value.

After the signal that gives the largest correlation value with the reception signal is determined, the ratio between the transmission signals at the frequency f4 is calculated by using the signal as a reference (Step S322). That is, the ratios of the transmission signals Tx41 to Tx48 at the frequency f4 are obtained from the ratios of the correlation values with the reception signal. Thus, the ratios of the transmission signals at the frequency f4 are also calculated. Therefore, the ratio of each of the transmission signals at the frequencies f1 to f4 is notified to the ratio-signal generating unit 227, and the ratio signal for each frequency is generated by the ratio-signal generating unit 227. Then, the cancel-equation generating unit 228 generates the cancel equation that uses the ratio signal. If the ratio signals at the frequencies f1 to f4 are TxA, TxB, TxC, and TxD, the cancel equation that calculates the cancel signal C is obtained as in, for example, the following Equation (5).

$$C = \{ p_1 |TxA|^4 + p_2 |TxB|^4 + p_3 |TxC|^4 + p_4 |TxD|^4$$
$$+ p_5 |TxA|^2 \cdot |TxB|^2 + p_6 |TxA|^2 \cdot |TxC|^2 + p_7 |TxA|^2 \cdot |TxD|^2$$
$$+ p_8 |TxB|^2 \cdot |TxC|^2 + p_9 |TxB|^2 \cdot |TxD|^2 + p_{10} |TxC|^2 \cdot |TxD|^2$$
$$+ p_{11} |TxA|^2 + p_{12} |TxB|^2 + p_{13} |TxC|^2 + p_{14} |TxD|^2$$
$$+ p_{15} \} \cdot TxA \cdot TxB \cdot conj(TxC) \qquad (5)$$

Here, Equation (5) is the cancel equation for generating a cancel signal to cancel third-order distortion, fifth-order distortion, and seventh-order distortion. Thus, even in a case where the number of frequencies or the number of transmitted waves transmitted at the same frequency is large, the cancel equation (5) includes only 15 coefficients from $p_1$ to $p_{15}$. Therefore, an increase in the amount of arithmetic processing may be prevented, and the circuit size may be reduced.

[b] Second Embodiment

A second embodiment is characterized in that, after the ratio of a transmission signal at each frequency is determined on the basis of the correlation value between the intermodulation distortion component and the reception signal, the ratio is adjusted such that the cancel gain becomes maximum.

As the configurations of a wireless communication system and a cancel device according to the second embodiment are the same as those in the first embodiment (FIG. 1), their explanations are omitted. According to the second embodiment, the function of the processor 220 of the cancel device is different from that in the first embodiment.

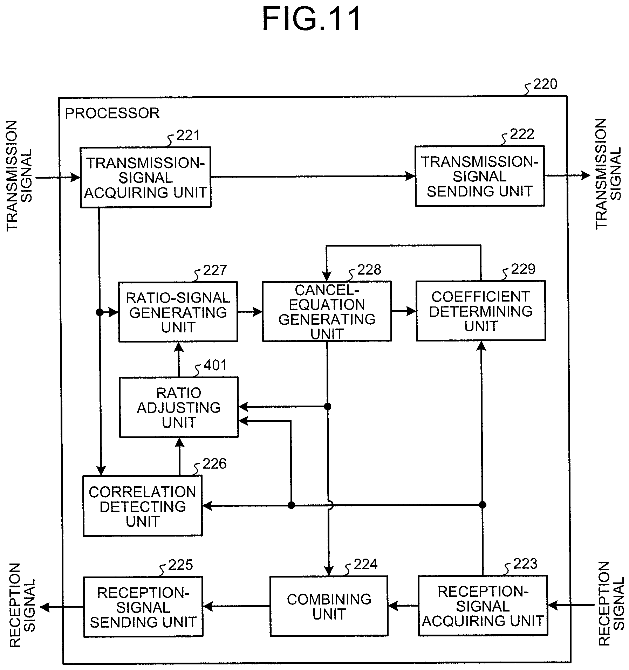

FIG. 11 is a block diagram that illustrates the function of the processor 220 according to the second embodiment. In FIG. 11, the same components as those in FIG. 3 are attached with the same reference numerals, and their explanations are omitted. The processor 220, illustrated in FIG. 11, has the configuration such that a ratio adjusting unit 401 is added to the processor 220 illustrated in FIG. 3.

After the correlation detecting unit 226 obtains the ratio of a transmission signal at each frequency, the ratio adjusting unit 401 sets the ratio as the initial value, and it causes the ratio-signal generating unit 227 to generate the ratio signal. Then, the ratio adjusting unit 401 acquires the cancel signal, output from the cancel-equation generating unit 228, and calculates the cancel gain due to the cancel signal. Then, the ratio adjusting unit 401 changes the ratio of any one of the transmission signals by a predetermined value, and it causes the ratio-signal generating unit 227 to generate the ratio signal. Then, the ratio adjusting unit 401 acquires the cancel signal, output from the cancel-equation generating unit 228 after the ratio is changed, and calculates the cancel gain due to the cancel signal.

The ratio adjusting unit 401 compares the cancel gains before and after the ratio is changed, and it changes the ratio of any one of the transmission signals by a predetermined value such that the cancel gain becomes maximum. Then, after the ratio for maximizing the cancel gain is determined with regard to the transmission signal, the ratio adjusting unit 401 determines the ratio for maximizing the cancel gain in the same manner with regard to other transmission signals. Finally, the ratio adjusting unit 401 sets the ratio of each transmission signal for maximizing the cancel gain, and it causes the ratio-signal generating unit 227 to generate the ratio signal.

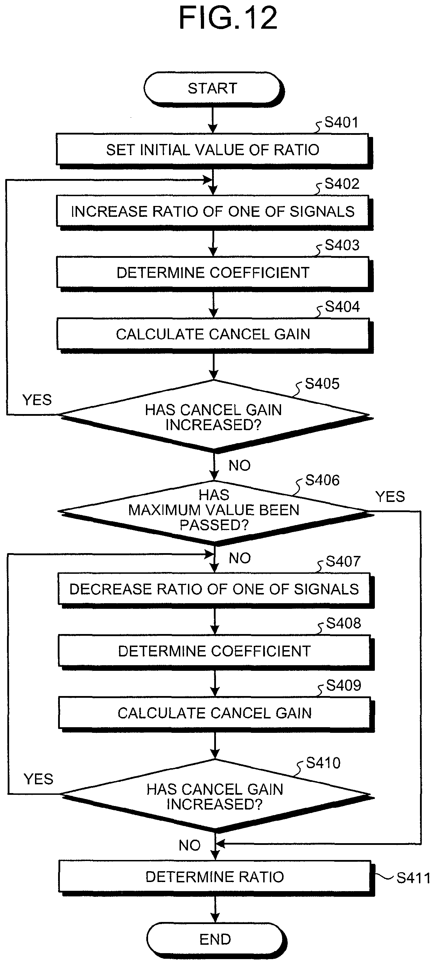

Next, with reference to the flowchart illustrated in FIG. 12, an explanation is given of a ratio adjustment process by the above-described ratio adjusting unit 401.

First, as is the case with the first embodiment, the correlation detecting unit 226 calculates the correlation value between the intermodulation distortion component and the reception signal and obtains the ratio of the correlation value, thereby determining the ratio of the transmission signal at each frequency. The ratio is notified to the ratio adjusting unit 401, and the notified ratio is set as the initial value by the ratio adjusting unit 401 (Step S401). That is, the ratio, notified by the correlation detecting unit 226, is notified to the ratio-signal generating unit 227, and the ratio signal is generated in the same manner as in the first embodiment. Then, the cancel-equation generating unit 228 and the coefficient determining unit 229 determine the cancel equation and its coefficient, and the cancel-equation generating unit 228 outputs the cancel signal.

The cancel signal is acquired by the ratio adjusting unit 401, and the cancel gain is calculated from the cancel signal and the reception signal. Specifically, the ratio adjusting unit 401 calculates the correlation value between the cancel signal and the reception signal, and the calculated correlation value is the cancel gain. Furthermore, the ratio adjusting unit 401 combines the reception signal with the cancel signal and obtains the difference in the electric power of the reception signal before and after the cancel signal is combined so that the obtained difference in the electric power may be the cancel gain. If the reception signal in the RRHs 300-1, 300-2 includes upstream signals transmitted from, for example, a wireless terminal device, it is preferable that the correlation value is the cancel gain. Conversely, if the reception signal in the RRHs 300-1, 300-2 does not include upstream signals transmitted from, for example, the wireless terminal device but it includes noise, it is preferable that the difference in the electric power is the cancel gain. With regard to each cancel gain, as the cancel gain is larger, it indicates that the intermodulation signal is effectively cancelled by the cancel signal.

After the cancel gain is calculated in a state where the initial value of the ratio is set, the ratio adjusting unit 401 increases the amplitude component in the ratio of any one of the transmission signals by a predetermined value (Step S402). Specifically, with regard to the target transmission signal, the ratio, of which the amplitude component has been increased by a predetermined value, is notified to the ratio-signal generating unit 227 so that the ratio signal is generated. Then, the cancel-equation generating unit 228 and the coefficient determining unit 229 determine the cancel equation and its coefficient (Step S403), and the cancel-equation generating unit 228 outputs the cancel signal.

The cancel signal, of which the ratio has been increased, is acquired by the ratio adjusting unit 401, and the cancel gain is calculated from the cancel signal and the reception signal (Step S404). Then, the calculated cancel gain is compared with the cancel gain in a state where the initial value of the ratio is set, and it is determined whether the cancel gain has increased (Step S405). As a result of the determination, if the cancel gain has increased (Yes at Step S405), the amplitude component in the ratio of the target transmission signal is further increased by a predetermined value (Step S402). After that, while the cancel gain is increased, the amplitude component in the ratio of the same transmission signal is increased by a predetermined value.

Conversely, if the cancel gain does not increase as compared to the cancel gain in a state where the initial value of the ratio is set or the previous cancel gain (No at Step S405), the ratio adjusting unit 401 determines whether the cancel gain passed through the maximum value and it is decreasing in turn (Step S406). That is, if the cancel gain increases during an increase in the ratio in the previous time and the cancel gain decreases during an increase in the ratio in this time, it is considered that the cancel gain reaches the maximum value due to an increase in the ratio in the previous time. Therefore, if it is determined that the cancel gain passed through the maximum value and it is decreasing in turn (Yes at Step S406), it is determined that the ratio, with which the cancel gain becomes maximum, is the optimum ratio for the target transmission signal (Step S411).

Furthermore, if the cancel gain does not increase as compared to the cancel gain in a state where the initial value of the ratio is set and it is determined that the cancel gain has not passed through the maximum value (No at Step S406), the ratio adjusting unit 401 decreases the amplitude component in the ratio of the target transmission signal by a predetermined value (Step S407). Specifically, with regard to the target transmission signal, the ratio, of which the amplitude component has been decreased by a predetermined value, is notified to the ratio-signal generating unit 227 so that the ratio signal is generated. Then, the cancel-equation generating unit 228 and the coefficient determining unit 229 determine the cancel equation and its coefficient (Step S408), and the cancel-equation generating unit 228 outputs the cancel signal.

The cancel signal, of which the ratio has been decreased, is acquired by the ratio adjusting unit 401, and the cancel gain is calculated from the cancel signal and the reception signal (Step S409). Then, the calculated cancel gain is compared with the cancel gain in a state where the initial value of the ratio is set, and it is determined whether the cancel gain has increased (Step S410). As a result of the determination, if the cancel gain has increased (Yes at Step S410), the amplitude component in the ratio of the target transmission signal is further decreased by a predetermined value (Step S407). After that, while the cancel gain is increased, the amplitude component in the ratio of the same transmission signal is decreased by a predetermined value.

Then, if the cancel gain has not increased even though the ratio is decreased (No at Step S410), it is considered that the cancel gain reaches the maximum value due to a decrease in the ratio in the previous time. Therefore, it is determined that the ratio, with which the cancel gain becomes maximum, is the optimum ratio for the target transmission signal (Step S411). In this way, if the optimum ratio is determined by increasing or decreasing the amplitude component, the same process as that for the amplitude component is performed on the phase component in the ratio.

Thus, the optimum ratio that maximizes the cancel gain is determined for the single transmission signal. Then, this ratio adjustment process is performed on each transmission signal. Therefore, even if the initial value of the ratio, calculated by the correlation detecting unit 226, has a low accuracy, the cancel gain may become maximum due to adjustment of the ratio, and a high-accuracy cancel signal may be generated.

As described above, according to the present embodiment, the initial value of the ratio of a transmission signal at each frequency is calculated due to detection of the correlation between the intermodulation distortion component and the reception signal, and the ratio of each transmission signal is adjusted such that the cancel gain due to the cancel signal becomes maximum. Therefore, even if the initial value of the ratio has a low accuracy, the cancel gain may be maximized, and the intermodulation signal attached to the reception signal may be accurately cancelled.

[c] Third Embodiment

A third embodiment is characterized in generation of a ratio signal in a case where a delayed transmission signal is emitted to the distortion generation source and there occurs an intermodulation signal that is affected by the delayed signal.

As the configurations of a wireless communication system and a cancel device according to the third embodiment are the same as those in the first embodiment (FIG. 1), their explanations are omitted. The third embodiment is different from the first embodiment in the configuration of the ratio-signal generating unit 227 included in the processor 220 of the cancel device.

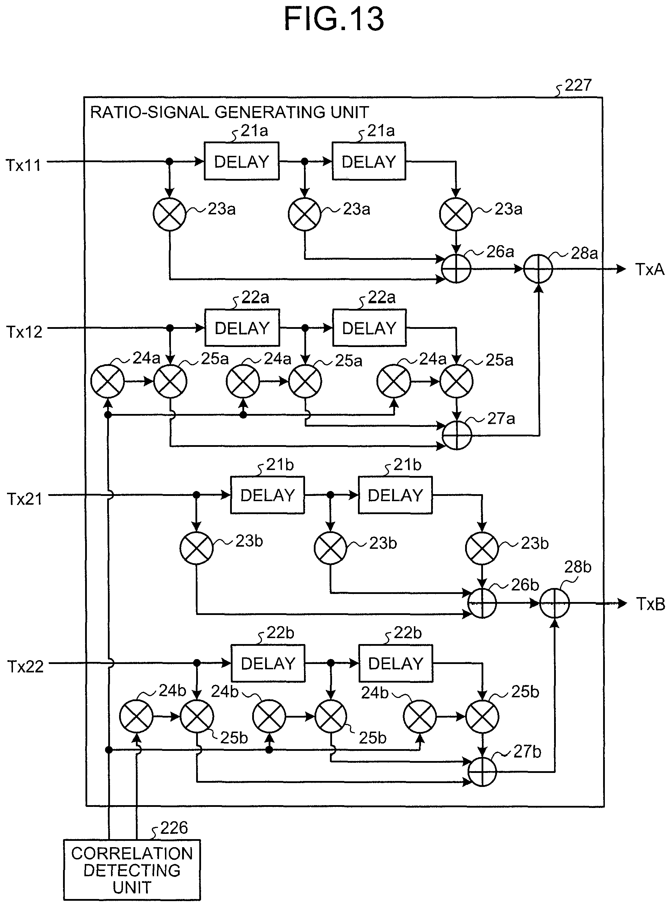

FIG. 13 is a diagram that illustrates the configuration of the ratio-signal generating unit 227 according to the third embodiment. As illustrated in FIG. 13, the ratio-signal generating unit 227 includes delay devices 21 a, 21 b, 22a, and 22b, multipliers 23a, 23b, 24a, 24b, 25a, and 25b, and adders 26a, 26b, 27a, 27b, 28a, and 28b.

The delay devices 21 a, 22a delay the transmission signals Tx11, Tx12 at the frequency f1, respectively, in a predetermined time. In the same manner, the delay devices 21 b, 22b delay the transmission signals Tx21, Tx22 at the frequency f2, respectively, in a predetermined time.

Each of the multipliers 23a multiplies the transmission signal Tx11 at the frequency f1 by a predetermined tap coefficient. Furthermore, each of the multipliers 24a multiplies the ratio of the transmission signal Tx12 at the frequency f1 by a predetermined tap coefficient. Then, each of the multipliers 25a multiplies the transmission signal Tx12 at the frequency f1 by the multiplication result of the multiplier 24a. In the same manner, each of the multipliers 23b multiplies the transmission signal Tx21 at the frequency f2 by a predetermined tap coefficient. Furthermore, each of the multipliers 24b multiplies the ratio of the transmission signal Tx22 at the frequency f2 by a predetermined tap coefficient. Furthermore, each of the multipliers 25b multiplies the transmission signal Tx22 at the frequency f2 by the multiplication result of the multiplier 24b.

The adder 26a adds the multiplication results of the multipliers 23a. Thus, it is possible to obtain the transmission signal Tx11 that is emitted to the distortion generation source together with the delayed signal. Furthermore, the adder 26b adds the multiplication results of the multipliers 23b. Thus, it is possible to obtain the transmission signal Tx21 that is emitted to the distortion generation source together with the delayed signal.

The adder 27a adds the multiplication results of the multipliers 25a. Thus, it is possible to obtain the signal that is obtained by multiplying the ratio, calculated by the correlation detecting unit 226, by the transmission signal Tx12 that is emitted to the distortion generation source together with the delayed signal. Furthermore, the adder 27b adds the multiplication results of the multipliers 25b. Thus, it is possible to obtain the signal that is obtained by multiplying the ratio, calculated by the correlation detecting unit 226, by the transmission signal Tx22 that is emitted to the distortion generation source together with the delayed signal.

The adder 28a adds the result of the addition of the adder 26a and the result of the addition of the adder 27a. This allows calculation of the ratio signal TxA that considers the delayed signal and that is equivalent to the above-described Equation (2). Furthermore, the adder 28b adds the result of the addition of the adder 26b and the result of the addition of the adder 27b. This allows calculation of the ratio signal TxB that considers the delayed signal and that is equivalent to the above-described Equation (3).

As described above, if a delayed signal of each transmission signal is considered, each delayed signal is multiplied by the tap coefficient and the ratio so that the ratio signal may be generated for each frequency. Then, as is the case with the first embodiment, after the ratio signal is generated, the cancel-equation generating unit 228 and the coefficient determining unit 229 determine the cancel equation and its coefficient so that the cancel signal may be generated.

As described above, according to the present embodiment, each transmission signal and its delayed signal are multiplied by the tap coefficient and the ratio so that the ratio signal is generated. Therefore, if a delayed signal is emitted to the distortion generation source and an intermodulation signal occurs, a cancel signal may be generated by using the cancel equation that uses a ratio signal, and the intermodulation signal may be efficiently cancelled.

[d] Fourth Embodiment

A fourth embodiment is characterized in that, with regard to the initial cancel equation in a case where the coefficient of high-order distortion is 0, the coefficient of third-order distortion is first determined and the ratio of each transmission signal is calculated on the basis of the coefficient of the third-order distortion.

As the configurations of a wireless communication system and a cancel device according to the fourth embodiment are the same as those in the first embodiment (FIG. 1), their explanations are omitted. The fourth embodiment is different from the first embodiment in the function of the processor 220 of the cancel device.

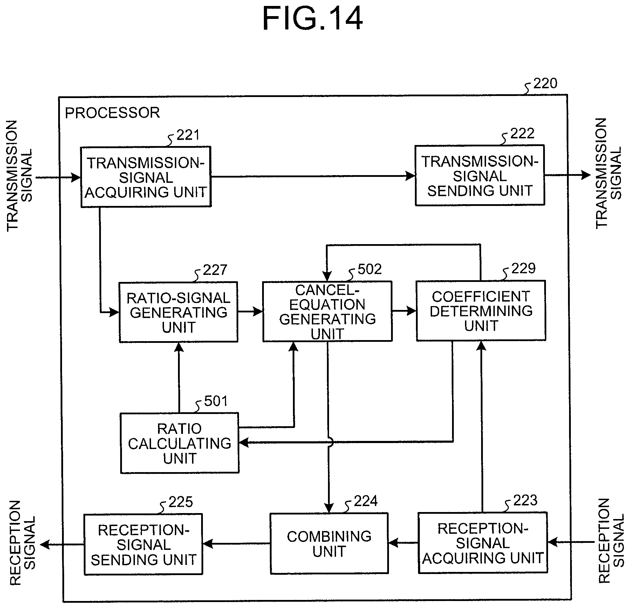

FIG. 14 is a block diagram that illustrates the function of the processor 220 according to the fourth embodiment. In FIG. 14, the same components as those in FIG. 3 are attached with the same reference numerals, and their explanations are omitted. The processor 220, illustrated in FIG. 14, includes a ratio calculating unit 501 and a cancel-equation generating unit 502 instead of the correlation detecting unit 226 and the cancel-equation generating unit 228 of the processor 220 illustrated in FIG. 3.

In the initial state, the ratio calculating unit 501 causes the cancel-equation generating unit 502 to generate the initial cancel equation in which all the coefficients are 0 with regard to fifth- or higher-order distortion in the cancel equation that does not use the ratio signal. Specifically, the ratio calculating unit 501 causes it to generate the initial cancel equation where, for example, all of $p_{11}$ to $p_{86}$ in the above Equation (1) are 0. The initial cancel equation is obtained as in the following Equation (6).

$$C = p_{91} \cdot Tx11 \cdot Tx11 \cdot conj(Tx21)$$
$$+ p_{92} \cdot Tx11 \cdot Tx12 \cdot conj(Tx21)$$
$$+ p_{93} \cdot Tx12 \cdot Tx12 \cdot conj(Tx21)$$
$$+ p_{94} \cdot Tx11 \cdot Tx11 \cdot conj(Tx22)$$
$$+ p_{95} \cdot Tx11 \cdot Tx12 \cdot conj(Tx22)$$
$$+ p_{96} \cdot Tx12 \cdot Tx12 \cdot conj(Tx22) \qquad (6)$$

Then, after the coefficient determining unit 229 determines the coefficients $p_{91}$ to $p_{96}$ of the initial cancel equation (6), the ratio calculating unit 501 obtains the ratios of the coefficients $p_{91}$ to $p_{96}$, thereby calculating the ratio of the transmission signal at each frequency. For example, to obtain the ratio between the transmission signal Tx11 and the transmission signal Tx12 at the frequency f1, the ratio calculating unit 501 obtains the ratio between the coefficients in the intermodulation distortion components where Tx11 is replaced with Tx12. Here, for example, as the coefficient $p_{91}$ and the coefficient $p_{92}$ are the coefficients that satisfy the condition, the ratio calculating unit 501 calculates the ratio between the coefficient $p_{91}$ and the coefficient $p_{92}$ and determines that the calculated ratio is the ratio between the transmission signal Tx11 and the transmission signal Tx12. Furthermore, if the ratio calculating unit 501 calculates the ratio between, for example, the coefficient $p_{91}$ and the coefficient $p_{93}$, it determines that the positive square root of the calculated ratio is the ratio between the transmission signal Tx11 and the transmission signal Tx12. This is because, in the intermodulation distortion component multiplied by the coefficient $p_{91}$ and the intermodulation distortion component multiplied by the coefficient $p_{93}$, the square of Tx11 is replaced with the square of Tx12.

In the same manner, to obtain the ratio between, for example, the transmission signal Tx21 and the transmission signal Tx22 at the frequency f2, the ratio calculating unit 501 obtains the ratio between the coefficients in the intermodulation distortion components where Tx21 is replaced with Tx22. Here, for example, as the coefficients $p_{91}$ and the coefficient $p_{94}$ are the coefficients that satisfy the condition, the ratio calculating unit 501 calculates the ratio between the coefficient $p_{91}$ and the coefficient $p_{94}$ and determines that the calculated ratio is the ratio between the transmission signal Tx21 and the transmission signal Tx22. Then, the ratio calculating unit 501 notifies the calculated ratio of each transmission signal to the ratio-signal generating unit 227.

In accordance with a command from the ratio calculating unit 501, the cancel-equation generating unit 502 generates the initial cancel equation where all the coefficients for fifth- or higher-order distortion are 0 without using the ratio signal in the initial state. Here, the cancel-equation generating unit 502 does not generate the cancel signal using the initial cancel equation even if the coefficient determining unit 229 determines the coefficient of the initial cancel equation. Then, after the ratio calculating unit 501 calculates the ratio of the transmission signal and the ratio-signal generating unit 227 outputs the ratio signal, the cancel-equation generating unit 502 generates the cancel equation using the ratio signal and generates the cancel signal in the same manner as the cancel-equation generating unit 228 according to the first embodiment.

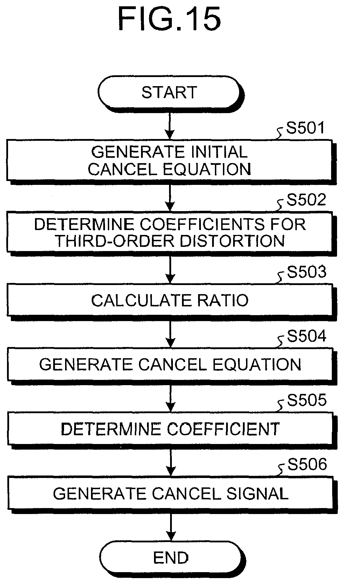

Next, with reference to the flowchart illustrated in FIG. 15, an explanation is given of a cancel-signal generation process according to the fourth embodiment.

After the transmission-signal acquiring unit 221 acquires the transmission signals Tx11, Tx12, Tx21, and Tx22, the ratio calculating unit 501 outputs the command for generating the initial cancel equation to the cancel-equation generating unit 502. In response to the command, the cancel-equation generating unit 502 generates the initial cancel equation which uses the transmission signals Tx11, Tx12, Tx21, and Tx22 without using the ratio signal and in which all the coefficients for fifth-or higher-order distortion are 0 (Step S501). Specifically, if the intermodulation signal at for example the frequency (2f1-f2) is included in the reception frequency band, the above-described initial cancel equation (6), which includes only the coefficients $p_{91}$ to $p_{96}$ for third-order distortion, is generated. Then, the coefficient determining unit 229 performs, for example, the least-square method that uses reception signals or correlation detection, thereby determining the coefficient of the initial cancel equation (Step S502). Here, the coefficient determining unit 229 determines the coefficients $p_{91}$ to $p_{96}$ for third-order distortion in for example the above-described Equation (6).

After the coefficients of the initial cancel equation are determined, the ratio calculating unit 501 is notified of the coefficients, and the ratio calculating unit 501 calculates the ratio of each transmission signal at each frequency (Step S503). Specifically, the ratio between the transmission signals Tx11, Tx12 at the frequency f1, for example, is obtained by calculating the ratio between the coefficients that are multiplied by the intermodulation distortion components where the transmission signals are replaced. Therefore, for example, the ratio between the coefficient $p_{91}$ and the coefficient $p_{92}$ is calculated, and the calculated ratio is the ratio between the transmission signal Tx11 and the transmission signal Tx12. In the same manner, the ratio between the transmission signals Tx21, Tx22 at the frequency f2 is obtained by calculating the ratio between, for example, the coefficient $p_{91}$ and the coefficient $p_{94}$.

After the ratio calculating unit 501 calculates the ratio between the transmission signals at the same frequency, the ratio-signal generating unit 227 multiplies each transmission signal by the ratio and adds them up, thereby generating the ratio signal for each frequency. Specifically, the transmission signals Tx11, Tx12 at the frequency f1, for example, are multiplied by the ratios and they are added up so that the ratio signal TxA at the frequency f1 is generated. In the same manner, the transmission signals Tx21, Tx22 at the frequency f2 are multiplied by the ratios and they are added up so that the ratio signal TxB at the frequency f2 is generated.

The generated ratio signal is output to the cancel-equation generating unit 502, and the cancel equation using the ratio signal is generated by the cancel-equation generating unit 502 (Step S504). That is, instead of the initial cancel equation that does not use the ratio signal, the above Equation (4) that uses the ratio signal is here generated as is the case with the first embodiment. Then, the coefficient determining unit 229 performs, for example, the least-square method that uses reception signals or correlation detection, thereby determining the coefficient of the cancel equation (Step S505). Here, the coefficients $p_{11}$, $p_{21}$, and $p_{31}$ of the above Equation (4) are determined by the coefficient determining unit 229.

After the coefficient is determined, the cancel equation makes it possible to generate the cancel signal from the transmission signal; therefore, the cancel-equation generating unit 502 generates the cancel signal (Step S506) and outputs it to the combining unit 224. Then, the combining unit 224 combines the reception signal with the cancel signal, thereby canceling the intermodulation signal attached to the reception signal.

As described above, according to the present embodiment, the coefficient for third-order distortion is obtained from the initial cancel equation where the coefficients for fifth- or higher-order distortion are 0, and the ratio of the transmission signal at each frequency is calculated on the basis of the coefficient for third-order distortion. Then, each transmission signal is multiplied by the ratio and is added up so that the ratio signal is generated for each frequency, and the cancel equation that uses the ratio signal is generated. Therefore, the ratio signal may be generated without detecting the correlation between the intermodulation distortion component and the reception signal, the ratio signal may be generated during a simple process, and the cancel equation with a few coefficients may be generated.

Furthermore, according to the above-described fourth embodiment, as the cancel equation (6) with regard to third-order distortion has been already obtained as the initial cancel equation, the cancel equation that uses the ratio signal may be generated for fifth- or higher-order distortion. Specifically, after the ratio calculating unit 501 calculates the ratio of each transmission signal, the cancel-equation generating unit 502 may generate the following Equation (7).

$$C=\{p_{11}|TxA|^2+p_{21}|TxB|\}\cdot TxA\cdot TxA\cdot conj(TxB)$$

$$+p_{91}\cdot Tx11\cdot Tx11\cdot conj(Tx21)$$

$$+p_{92}\cdot Tx11\cdot Tx12\cdot conj(Tx21)$$

$$+p_{93}\cdot Tx12\cdot Tx12\cdot conj(Tx21)$$

$$+p_{94}\cdot Tx11\cdot Tx11\cdot conj(Tx22)$$

$$+p_{95}\cdot Tx11\cdot Tx12\cdot conj(Tx22)$$

$$+p_{96}\cdot Tx12\cdot Tx12\cdot conj(Tx22) \tag{7}$$

Furthermore, according to each of the above-described embodiments, although the processor 220 of the cancel device 200 performs the distortion cancel process, the cancel device 200 does not always need to be provided as an independent device. That is, the function of the processor 220 of the cancel device 200 may be provided in, for example, the processor 110 of the BBU 100. Furthermore, the processor that has the function equivalent to that of the processor 220 may be included in the RRH 300-1 or the RRH 300-2.

Furthermore, the above-described embodiments may be implemented in combination as appropriate. That is, for example, the second embodiment and the third embodiment may be combined so that the ratio of each transmission signal is adjusted such that the cancel gain becomes maximum and the adjusted ratio is also multiplied by the delayed signal to generate the ratio signal.

The distortion cancel process, described in each of the above-described embodiments, may be also recorded as a program executable by a computer. In this case, the program may be stored in a recording medium readable by a computer and be installed in the computer. The recording media readable by computers include, for example, portable recording media, such as a CD-ROM, DVD disk, or USB memory, or semiconductor memories, such as a flash memory.

According to an aspect of the distortion cancel device and the distortion cancel method, disclosed in the subject application, there are advantages such that an increase in the amount of arithmetic processing may be prevented and the circuit size may be reduced.

**Claims**

1.  A distortion cancel device (200) comprising:

    a first acquiring unit (210) that acquires a plurality of transmission signals including at least two transmission signals that are wirelessly transmitted at an identical frequency;
    a second acquiring unit (240) that acquires a reception signal to which an intermodulation signal generated due to the transmission signals is attached; and
    a processor (220) that executes a process including:

    determining a ratio of the transmission signals acquired by the first acquiring unit (210) and wirelessly transmitted at the identical frequency;
    generating a ratio signal for each frequency from the transmission signals in accordance with the determined ratio;
    generating a cancel signal corresponding to the intermodulation signal by using an arithmetic expression that uses the generated ratio signal; and
    combining the generated cancel signal with the reception signal acquired by the second acquiring unit (240).

2.  The distortion cancel device (200) according to claim 1, wherein the determining includes calculating a correlation value between the reception signal and each intermodulation distortion component generated from the transmission signals, and determining the ratio of the transmission signals based on a ratio between correlation values of an intermodulation distortion component of which a calculated correlation value is largest and another intermodulation distortion component.

3.  The distortion cancel device (200) according to any of claims 1 and 2, wherein the process further includes adjusting the ratio of the transmission signals such that cancel gain indicating gain with which the intermodulation signal is canceled from the reception signal due to the generated cancel signal, becomes maximum.

4. The distortion cancel device (200) according to any of claims 1 to 3, wherein the generating the ratio signal includes multiplying each transmission signal by the determined ratio and adding multiplication results for each frequency to generate the ratio signal.

5. The distortion cancel device (200) according to any of claims 1 to 3, wherein the generating the ratio signal includes multiplying each transmission signal and a delayed signal obtained by delaying each transmission signal by the determined ratio and adding multiplication results for each frequency to generate the ratio signal.

6. The distortion cancel device (200) according to claim 1, wherein the determining includes
determining a coefficient included in an initial arithmetic expression that adds up a product of a coefficient and each intermodulation distortion component generated from the transmission signals, and
determining the ratio of the transmission signals based on a ratio of the determined coefficient.

7. A distortion cancel method comprising:

acquiring a plurality of transmission signals including at least two transmission signals that are wirelessly transmitted at an identical frequency;
acquiring a reception signal to which an intermodulation signal generated due to the transmission signals is attached;
determining a ratio of the acquired transmission signals wirelessly transmitted at the identical frequency;
generating a ratio signal for each frequency from the transmission signals in accordance with the determined ratio;
generating a cancel signal corresponding to the intermodulation signal by using an arithmetic expression that uses the generated ratio signal; and
combining the generated cancel signal with the reception signal.

# FIG.1

EP 3 193 455 A1

# FIG.2

| NUMBER OF BANDS | NUMBER OF TRANSMITTED WAVES AT SAME FREQUENCY | TOTAL NUMBER OF TRANSMITTED WAVES | ORDER OF DISTORTION | NUMBER OF COEFFICIENTS |
|---|---|---|---|---|
| 2 | 2 | 4 | THIRD ORDER | 6 |
| 2 | 4 | 8 | THIRD ORDER | 40 |
| 2 | 8 | 16 | THIRD ORDER | 288 |
| 2 | 2 | 4 | THIRD ORDER AND FIFTH ORDER | 54 |
| 2 | 4 | 8 | THIRD ORDER AND FIFTH ORDER | 1320 |
| 2 | 8 | 16 | THIRD ORDER AND FIFTH ORDER | 31752 |

| NUMBER OF BANDS | NUMBER OF TRANSMITTED WAVES AT SAME FREQUENCY | TOTAL NUMBER OF TRANSMITTED WAVES | ORDER OF DISTORTION | NUMBER OF COEFFICIENTS |
|---|---|---|---|---|
| 3 | 2 | 6 | THIRD ORDER | 8 |
| 3 | 4 | 12 | THIRD ORDER | 64 |
| 3 | 8 | 24 | THIRD ORDER | 512 |
| 3 | 2 | 6 | THIRD ORDER AND FIFTH ORDER | 104 |
| 3 | 4 | 12 | THIRD ORDER AND FIFTH ORDER | 3136 |
| 3 | 8 | 24 | THIRD ORDER AND FIFTH ORDER | 98816 |

# FIG.4

RATIO-SIGNAL
GENERATING UNIT ⌐227

Tx11

⌐11a          ⌐12a → TxA

Tx12 —⊗

Tx21          ⌐12b → TxB

⌐11b

Tx22 —⊗

⌐226
CORRELATION
DETECTING
UNIT

# FIG.5

```
                    ┌─────────────┐
                    │    START    │
                    └──────┬──────┘
                           │           ⌐S101
                    ┌──────▼────────────────────┐
                    │ ACQUIRE TRANSMISSION SIGNAL │
                    └──────┬────────────────────┘
                           │           ⌐S102
                    ┌──────▼────────────────────┐
                    │   ACQUIRE RECEPTION SIGNAL  │
                    └──────┬────────────────────┘
                           │           ⌐S103
                    ┌──────▼────────────────────┐
                    ││  RATIO CALCULATION PROCESS ││
                    └──────┬────────────────────┘
                           │           ⌐S104
                    ┌──────▼────────────────────┐
                    │    GENERATE RATIO SIGNAL    │
                    └──────┬────────────────────┘
                           │           ⌐S105
                    ┌──────▼────────────────────┐
                    │  GENERATE CANCEL EQUATION   │
                    └──────┬────────────────────┘
                           │           ⌐S106
                    ┌──────▼────────────────────┐
                    │    DETERMINE COEFFICIENT    │
                    └──────┬────────────────────┘
                           │           ⌐S107
                    ┌──────▼────────────────────┐
                    │   GENERATE CANCEL SIGNAL    │
                    └──────┬────────────────────┘
                           │           ⌐S108
                    ┌──────▼────────────────────┐
                    │  COMBINE RECEPTION SIGNAL   │
                    └──────┬────────────────────┘
                           │           ⌐S109
                    ┌──────▼────────────────────┐
                    │   SEND RECEPTION SIGNAL     │
                    └──────┬────────────────────┘
                           │
                    ┌──────▼──────┐
                    │     END     │
                    └─────────────┘
```

# FIG.6

START

↓

FIX SIGNAL AT FREQUENCY f1 ⌐S201

↓

CALCULATE CORRELATION VALUE WHILE CHANGING SIGNAL AT FREQUENCY f2 ⌐S202

↓

DETECT LARGEST CORRELATION VALUE ⌐S203

↓

EQUAL TO OR MORE THAN PREDETERMINED THRESHOLD? ⌐S204 — NO →

MAY SIGNAL AT FREQUENCY f1 BE CHANGED? ⌐S205 — NO →

YES ↓

CHANGE SIGNAL AT FREQUENCY f1 ⌐S206

↓

STAND BY FOR PREDETERMINED TIME PERIOD ⌐S207

YES ↓

FIX SIGNAL AT FREQUENCY f2 ⌐S208

↓

CALCULATE CORRELATION VALUE WHILE CHANGING SIGNAL AT FREQUENCY f1 ⌐S209

↓

DETECT LARGEST CORRELATION VALUE ⌐S210

↓

A

# FIG.7

A

CALCULATE RATIO OF SIGNAL AT FREQUENCY
f1 BY USING SIGNAL WITH LARGEST
CORRELATION VALUE AS REFERENCE
⌐S211

CALCULATE RATIO OF SIGNAL AT FREQUENCY
f2 BY USING SIGNAL WITH LARGEST
CORRELATION VALUE AS REFERENCE
⌐S212

END

# FIG.8

| NUMBER OF BANDS | NUMBER OF TRANSMITTED WAVES AT SAME FREQUENCY | TOTAL NUMBER OF TRANSMITTED WAVES | ORDER OF DISTORTION | NUMBER OF COEFFICIENTS |
|---|---|---|---|---|
| 2 | 2 | 4 | THIRD ORDER | 1 |
| 2 | 4 | 8 | THIRD ORDER | 1 |
| 2 | 8 | 16 | THIRD ORDER | 1 |
| 2 | 2 | 4 | THIRD ORDER AND FIFTH ORDER | 3 |
| 2 | 4 | 8 | THIRD ORDER AND FIFTH ORDER | 3 |
| 2 | 8 | 16 | THIRD ORDER AND FIFTH ORDER | 3 |

| NUMBER OF BANDS | NUMBER OF TRANSMITTED WAVES AT SAME FREQUENCY | TOTAL NUMBER OF TRANSMITTED WAVES | ORDER OF DISTORTION | NUMBER OF COEFFICIENTS |
|---|---|---|---|---|
| 3 | 2 | 6 | THIRD ORDER | 1 |
| 3 | 4 | 12 | THIRD ORDER | 1 |
| 3 | 8 | 24 | THIRD ORDER | 1 |
| 3 | 2 | 6 | THIRD ORDER AND FIFTH ORDER | 4 |
| 3 | 4 | 12 | THIRD ORDER AND FIFTH ORDER | 4 |
| 3 | 8 | 24 | THIRD ORDER AND FIFTH ORDER | 4 |

# FIG.9

START

S301
FIX SIGNALS AT
FREQUENCIES f1, f2

S302
CALCULATE CORRELATION VALUE
WHILE CHANGING SIGNAL AT
FREQUENCY f3

S303
DETECT LARGEST
CORRELATION VALUE

S304
EQUAL
TO OR MORE
THAN PREDETERMINED
THRESHOLD?

NO

YES

S310
FIX SIGNALS AT
FREQUENCIES f1, f3

S311
CALCULATE CORRELATION VALUE
WHILE CHANGING SIGNAL AT
FREQUENCY f2

S312
DETECT LARGEST
CORRELATION VALUE

B

S305
MAY SIGNAL AT
FREQUENCY f1 BE
CHANGED?

NO

YES

S306
CHANGE SIGNAL AT FREQUENCY f1

S307
MAY SIGNAL AT
FREQUENCY f2 BE
CHANGED?

NO

YES

S308
CHANGE SIGNAL AT
FREQUENCY f2

S309
STAND BY FOR PREDETERMINED
TIME PERIOD

# FIG.10

(B)

S313
FIX SIGNALS AT FREQUENCIES f2, f3

S314
CALCULATE CORRELATION VALUE WHILE
CHANGING SIGNAL AT FREQUENCY f1

S315
DETECT LARGEST CORRELATION VALUE

S316
CALCULATE RATIO OF SIGNAL AT
FREQUENCY f1 BY USING SIGNAL WITH
LARGEST CORRELATION VALUE AS
REFERENCE

S317
CALCULATE RATIO OF SIGNAL AT
FREQUENCY f2 BY USING SIGNAL WITH
LARGEST CORRELATION VALUE AS
REFERENCE

S318
CALCULATE RATIO OF SIGNAL AT
FREQUENCY f3 BY USING SIGNAL WITH
LARGEST CORRELATION VALUE AS
REFERENCE

S319
FIX SIGNALS AT FREQUENCIES f1 TO f3

S320
CALCULATE CORRELATION VALUE WHILE
CHANGING SIGNAL AT FREQUENCY f4

S321
DETECT LARGEST CORRELATION VALUE

S322
CALCULATE RATIO OF SIGNAL AT
FREQUENCY f4 BY USING SIGNAL WITH
LARGEST CORRELATION VALUE AS
REFERENCE

END

# FIG.11

# FIG.12

```
                    ┌──────────────┐
                    │    START     │
                    └──────┬───────┘
                           │              ⌐S401
              ┌────────────▼──────────────┐
              │  SET INITIAL VALUE OF RATIO │
              └────────────┬──────────────┘
                           │              ⌐S402
       ┌──────────────────►┤
       │      ┌────────────▼──────────────┐
       │      │ INCREASE RATIO OF ONE OF SIGNALS │
       │      └────────────┬──────────────┘
       │                   │              ⌐S403
       │      ┌────────────▼──────────────┐
       │      │   DETERMINE COEFFICIENT   │
       │      └────────────┬──────────────┘
       │                   │              ⌐S404
       │      ┌────────────▼──────────────┐
       │      │    CALCULATE CANCEL GAIN  │
       │      └────────────┬──────────────┘
       │                   │              ⌐S405
       │ YES         ◇─────▼─────◇
       └────────────◇ HAS CANCEL GAIN ◇
                     ◇  INCREASED?     ◇
                          ◇─────┬─────◇
                                │ NO
                                │        ⌐S406
                          ◇─────▼─────◇        YES
                     ◇       HAS       ◇──────────┐
                     ◇ MAXIMUM VALUE BEEN ◇        │
                     ◇     PASSED?      ◇          │
                          ◇─────┬─────◇           │
                                │ NO      ⌐S407    │
       ┌───────────────────────►┤                 │
       │      ┌─────────────────▼──────────────┐  │
       │      │ DECREASE RATIO OF ONE OF SIGNALS │  │
       │      └─────────────────┬──────────────┘  │
       │                        │        ⌐S408     │
       │      ┌─────────────────▼──────────────┐  │
       │      │      DETERMINE COEFFICIENT      │  │
       │      └─────────────────┬──────────────┘  │
       │                        │        ⌐S409     │
       │      ┌─────────────────▼──────────────┐  │
       │      │      CALCULATE CANCEL GAIN      │  │
       │      └─────────────────┬──────────────┘  │
       │                        │        ⌐S410     │
       │ YES              ◇─────▼─────◇            │
       └─────────────────◇ HAS CANCEL GAIN ◇       │
                          ◇  INCREASED?    ◇       │
                              ◇─────┬─────◇        │
                                    │ NO ◄─────────┘
              ┌─────────────────────▼──────────────┐
              │        DETERMINE RATIO             │──S411
              └─────────────────────┬──────────────┘
                           ┌────────▼───────┐
                           │      END       │
                           └────────────────┘
```

# FIG.13

# FIG.14

# FIG.15

```
        ┌──────────────┐
        │    START     │
        └──────────────┘
               │
               ▼           ⌐S501
        ┌──────────────────────┐
        │   GENERATE INITIAL   │
        │   CANCEL EQUATION    │
        └──────────────────────┘
               │
               ▼           ⌐S502
        ┌──────────────────────┐
        │DETERMINE COEFFICIENTS FOR│
        │  THIRD-ORDER DISTORTION  │
        └──────────────────────┘
               │
               ▼           ⌐S503
        ┌──────────────────────┐
        │   CALCULATE RATIO    │
        └──────────────────────┘
               │
               ▼           ⌐S504
        ┌──────────────────────┐
        │ GENERATE CANCEL EQUATION │
        └──────────────────────┘
               │
               ▼           ⌐S505
        ┌──────────────────────┐
        │ DETERMINE COEFFICIENT│
        └──────────────────────┘
               │
               ▼           ⌐S506
        ┌──────────────────────┐
        │ GENERATE CANCEL SIGNAL │
        └──────────────────────┘
               │
               ▼
        ┌──────────────┐
        │     END      │
        └──────────────┘
```

Europäisches
Patentamt

European
Patent Office

Office européen
des brevets

# EUROPEAN SEARCH REPORT

Application Number

EP 17 15 0466

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/111515 A1 (SU YOUPING [CN] ET AL) 23 April 2015 (2015-04-23) * paragraph [0020] - paragraph [0051] * * figures 1-5 * ----- | 1-7 | INV. H04B1/12 H04B1/525 ADD. H04B7/06 |
| A | US 2014/161159 A1 (BLACK GREGORY R [US] ET AL) 12 June 2014 (2014-06-12) * paragraph [0003] - paragraph [0005] * * paragraph [0019] - paragraph [0047] * * figures 2-7 * ----- | 1-7 | |

TECHNICAL FIELDS
SEARCHED (IPC)

H04B

The present search report has been drawn up for all claims

| Place of search | Date of completion of the search | Examiner |
|---|---|---|
| Munich | 18 May 2017 | Patrovsky, Andreas |

EPO FORM 1503 03.82 (P04C01)

## ANNEX TO THE EUROPEAN SEARCH REPORT
## ON EUROPEAN PATENT APPLICATION NO.

EP 17 15 0466

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2017

| Patent document cited in search report | | Publication date | Patent family member(s) | | Publication date |
|---|---|---|---|---|---|
| US 2015111515 | A1 | 23-04-2015 | CN | 104335493 A | 04-02-2015 |
| | | | EP | 2856656 A1 | 08-04-2015 |
| | | | US | 2015111515 A1 | 23-04-2015 |
| | | | WO | 2013176590 A1 | 28-11-2013 |
| US 2014161159 | A1 | 12-06-2014 | CN | 104871433 A | 26-08-2015 |
| | | | EP | 2932605 A1 | 21-10-2015 |
| | | | KR | 20150132077 A | 25-11-2015 |
| | | | US | 2014161159 A1 | 12-06-2014 |
| | | | WO | 2014093012 A1 | 19-06-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009526442 A